(19) Europäisches Patentamt
European Patent Office
Office européen des brevets

(11) EP 4 331 862 A1

(12) EUROPEAN PATENT APPLICATION
published in accordance with Art. 153(4) EPC

(43) Date of publication:
**06.03.2024 Bulletin 2024/10**

(21) Application number: **22795638.0**

(22) Date of filing: **19.04.2022**

(51) International Patent Classification (IPC):
***B60C 1/00*** (2006.01) ***C08C 19/22*** (2006.01)
***C08F 236/10*** (2006.01) ***C08L 15/00*** (2006.01)
***C08K 3/011*** (2018.01) ***C08K 3/013*** (2018.01)

(52) Cooperative Patent Classification (CPC):
**B60C 1/00; C08C 19/22; C08F 236/10; C08K 3/011; C08K 3/013; C08L 15/00;** Y02T 10/86

(86) International application number:
**PCT/JP2022/018202**

(87) International publication number:
**WO 2022/230725 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2021 JP 2021075091**

(71) Applicants:
- **ZS Elastomers Co., Ltd.**
  **Tokyo 100-8246 (JP)**
- **Sumitomo Chemical Company Limited**
  **Tokyo 103-6020 (JP)**
- **Zeon Corporation**
  **Tokyo 100-8246 (JP)**

(72) Inventors:
- **SUGINO, Yoshitaka**
  **Tokyo 100-8246 (JP)**
- **OHNO, Keita**
  **Tokyo 100-8246 (JP)**
- **HAMA, Hisakatsu**
  **Sodegaura-shi, Chiba 299-0295 (JP)**
- **MORITOMI, Satoru**
  **Ichihara-shi, Chiba 299-0195 (JP)**
- **MIYAZAKI, Yosuke**
  **Ichihara-shi, Chiba 299-0195 (JP)**

(74) Representative: **Maiwald GmbH**
**Elisenhof**
**Elisenstraße 3**
**80335 München (DE)**

(54) **CONJUGATED DIENE-BASED POLYMER, RUBBER COMPOSITION, RUBBER-CROSSLINKED SUBSTANCE, AND TIRE**

(57) Provided is a conjugated diene polymer containing at least conjugated diene monomer units, wherein the conjugated diene polymer has an ionic strength index of 25% or more and a molecular weight distribution curve where two or more peaks are present when measured by gel permeation chromatography, wherein when among the peaks in the molecular weight distribution curve, a peak having the largest peak area proportion is defined as a first peak, and a peak having the second largest peak area proportion is defined as a second peak, the conjugated diene polymer has an entire molecular weight distribution (Mw/Mn) of 1.50 or more, the first peak has a molecular weight distribution (Mw/Mn) of 1.30 or less, and the second peak has a molecular weight distribution (Mw/Mn) of 1.30 or less.

EP 4 331 862 A1

## Description

TECHNICAL FIELD

The present invention relates to a conjugated diene polymer, a rubber composition, a cross-linked rubber, and a tire, and more specifically relates to a conjugated diene polymer which has high processability and can provide a cross-linked rubber having excellent strength properties, wear resistance, and fuel efficiency, and a rubber composition, a cross-linked rubber, and a tire prepared using such a conjugated diene polymer.

BACKGROUND ART

Due to recent increasing environmental concerns, a polymer for use in tires for automobiles which can provide excellent fuel efficiency is also required. Tires prepared from a rubber composition containing a conjugated diene polymer and silica as a filler have lower heat buildup than that of tires prepared from traditional rubber compositions containing carbon black, and thus have more excellent fuel efficiency.

As a conjugated diene polymer which is used to form such a tire, Patent Document 1 discloses a modified conjugated diene polymer satisfying the following conditions (I) to (IV):

(I) The modified conjugated diene polymer has at least two peaks in a molecular weight distribution curve obtained in measurement by gel permeation chromatography (GPC).

(II) The molecular weight distribution curve contains a peak (B) of peak molecular weight of 500,000 to 2,500,000 and a peak (T) of peak molecular weight of 150,000 to 600,000 where the peak of the largest molecular weight is defined as peak (B) and a peak having the largest peak area excluding the peak (B) is defined as peak (T).

(III) The area of the peak (T) is 30% to 80% and the total of the area of the peak (B) and that of the peak (T) is 65% or more where the total area of the molecular weight distribution curve is 100%.

(IV) 60% to 99% of modified polymer chains are present within an area of 5% from the low molecular weight side in the molecular weight distribution curve.

RELATED ART DOCUMENTS

PATENT DOCUMENTS

Patent Document 1: WO 2018/056025

SUMMARY OF THE INVENTION

PROBLEM TO BE SOLVED BY THE INVENTION

The conjugated diene polymer prepared by the technique disclosed in Patent Document 1 has insufficient processability, and the cross-linked rubber prepared therefrom has strength properties, wear resistance, and fuel efficiency which are susceptible to improvement.

The present invention has been made in consideration of the above problems, and an object of the present invention is to provide a conjugated diene polymer which has high processability and can provide a cross-linked rubber having excellent strength properties, wear resistance, and fuel efficiency. Another object of the present invention is to provide a rubber composition, a cross-linked rubber, and a tire prepared from such a conjugated diene polymer.

MEANS FOR SOLVING PROBLEMS

The present inventors, who have conducted extensive research to achieve the above object, have found that the above object can be achieved by a conjugated diene polymer which has two or more peaks in a molecular weight distribution curve, has an entire molecular weight distribution (Mw/Mn) in a specific range, has a first peak having the largest peak area proportion in the molecular weight distribution curve and having a molecular weight distribution (Mw/Mn) in a specific range, has a second peak having the second largest peak area proportion in the molecular weight distribution curve and having a molecular weight distribution (Mw/Mn) in a specific range, and has an ionic strength index in a specific range, and have completed the present invention.

Specifically, the present invention provides a conjugated diene polymer containing at least conjugated diene monomer units, wherein the conjugated diene polymer has an ionic strength index of 25% or more, and

has a molecular weight distribution curve where two or more peaks are present when measured by gel permeation chromatography,

wherein when among the peaks in the molecular weight distribution curve, a peak having the largest peak area proportion is defined as a first peak, and a peak having the second largest peak area proportion is defined as a second peak,

the conjugated diene polymer has an entire molecular weight distribution (Mw/Mn) of 1.50 or more, the first peak has a molecular weight distribution (Mw/Mn) of 1.30 or less, and the second peak has a molecular weight distribution (Mw/Mn) of 1.30 or less.

In the conjugated diene polymer according to the present invention, preferably, the first peak has a peak top molecular weight of 3.5 times or larger than that of the second peak.

In the conjugated diene polymer according to the present invention, the peak area proportion of the first peak is more than 50% in the entire molecular weight distribution curve.

In the conjugated diene polymer according to the present invention, preferably, the peak top molecular weight of the first peak is 550,000 or more.

The present invention also provides a rubber composition comprising the conjugated diene polymer, and a filler.

The present invention further provides a cross-linked rubber prepared by cross-linking the rubber composition, and a tire comprising such a cross-linked rubber.

## EFFECTS OF INVENTION

The present invention provides a conjugated diene polymer which has high processability and can provide a cross-linked rubber having excellent strength properties, wear resistance, and fuel efficiency. The present invention also provides a rubber composition, a cross-linked rubber, and a tire prepared from such a conjugated diene polymer.

## DESCRIPTION OF EMBODIMENTS

### <Conjugated diene polymer>

The conjugated diene polymer according to the present invention is a conjugated diene polymer containing at least conjugated diene monomer units, the conjugated diene polymer having:

an ionic strength index of 25% or more; and

a molecular weight distribution curve where two or more peaks are present when measured by gel permeation chromatography,

wherein when among the peaks in the molecular weight distribution curve, a peak having the largest peak area proportion is defined as a first peak, and a peak having the second largest peak area proportion is defined as a second peak, the conjugated diene polymer has an entire molecular weight distribution (Mw/Mn) of 1.50 or more, the first peak has a molecular weight distribution (Mw/Mn) of 1.30 or less, and the second peak has a molecular weight distribution (Mw/Mn) of 1.30 or less.

The conjugated diene polymer according to the present invention contains conjugated diene monomer units, and examples of conjugated diene compounds for forming conjugated diene monomer units include 1,3-butadiene, isoprene, 2,3-dimethyl-1,3-butadiene, 2-chloro-1,3-butadiene, 1,3-pentadiene, 1,3-hexadiene, and the like. Among these, preferred are 1,3-butadiene and isoprene, and more preferred is 1,3-butadiene.

The lower limit of the proportion of conjugated diene monomer units in the conjugated diene polymer according to the present invention is more than 0% by weight. From the viewpoint of wear resistance and fuel efficiency of a cross-linked rubber thereof, the lower limit of the proportion is preferably 25% by weight or more, more preferably 35% by weight or more, still more preferably 45% by weight or more, particularly preferably 55% by weight or more, most preferably 65% by weight or more in 100% by weight of the total amount of total monomer units. On the other hand, the upper limit of the proportion of conjugated diene monomer units is less than 100% by weight. From the viewpoint of processability of the conjugated diene polymer, a preferred upper limit thereof is preferably 95% by weight or less, more preferably 90% by weight or less, still more preferably 85% by weight or less, particularly preferably 80% by weight or less in 100% by weight of the total amount of total monomer units.

In the conjugated diene polymer according to the present invention, the vinyl bond content of the conjugated diene monomer units is preferably 1 to 90 mol%, more preferably 10 to 80 mol%, still more preferably 20 to 70 mol%, further still more preferably 25 to 65 mol%, particularly preferably 30 to 60 mol%, most preferably 30 to 44 mol%. When the vinyl bond content of the conjugated diene monomer units is controlled within the ranges above, a cross-linked

rubber having further enhanced fuel efficiency can be obtained.

The conjugated diene polymer according to the present invention is preferably a copolymer containing aromatic vinyl monomer units in addition to conjugated diene monomer units. Examples of aromatic vinyl monomers for forming aromatic vinyl monomer units include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene.

In the conjugated diene polymer according to the present invention, the upper limit of the proportion of aromatic vinyl monomer units is less than 100% by weight. From the viewpoint of wear resistance and fuel efficiency of a cross-linked rubber thereof, the upper limit of the proportion is preferably 75% by weight or less, more preferably 65% by weight or less, still more preferably 55% by weight or less, particularly preferably 45% by weight or less, most preferably 35% by weight or less in 100% by weight of the total amount of total monomer units. On the other hand, the lower limit of the proportion of aromatic vinyl monomer units is 0% by weight or more. From the viewpoint of processability of the conjugated diene polymer, a preferred lower limit thereof is preferably 5% by weight or more, more preferably 10% by weight or more, still more preferably 15% by weight or more, particularly preferably 20% by weight or more in 100% by weight of the total amount of total monomer units.

The conjugated diene polymer according to the present invention may also contain units of a vinyl compound having a functional group interactive with silica in addition to the conjugated diene monomer units and the aromatic vinyl monomer units optionally contained.

The vinyl compound having a functional group interactive with silica for forming units of a vinyl compound having a functional group interactive with silica can be any compound having a functional group interactive with silica and a vinyl group, and is not particularly limited. Here, the functional group interactive with silica is a functional group which forms a covalent bond between the functional group and the silica surface or can cause an intermolecular force weaker than a covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like. Among these, preferred are silicon atom-containing functional groups because they are highly interactive with silica.

In a preferred embodiment of the vinyl compound having a functional group interactive with silica, the vinyl compound having a silicon atom-containing functional group which can be suitably used is, for example, a compound represented by General Formula (1) below:

[Chem. 1]

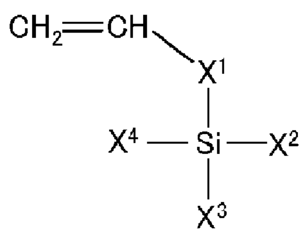

(1)

In General Formula (1) above, $X^1$ represents a chemical single bond or a hydrocarbylene group, and $X^2$, $X^3$, and $X^4$ each independently represent a substituted amino group, a hydrocarbyloxy group, or an optionally substituted hydrocarbyl group.

In General Formula (1) above, $X^1$ is a chemical single bond or a hydrocarbylene group, preferably a chemical single bond. Examples of the hydrocarbylene group include alkylene groups, alkenediyl groups, arylene groups, groups of arylene groups bonded to alkylene groups, and the like.

Examples of alkylene groups include a methylene group, an ethylene group, a trimethylene group, and the like. Examples of alkenediyl group include a vinylene group, an ethylene-1,1-diyl group, and the like. Examples of arylene groups include a phenylene group, a naphthylene group, a biphenylene group, and the like. Examples of groups of arylene groups bonded to alkylene groups include a group of a phenylene group bonded to a methylene group, a group of a phenylene group bonded to an ethylene group, and the like. When $X^1$ is a hydrocarbylene group, $X^1$ is preferably an arylene group, more preferably a phenylene group.

In General Formula (1) above, $X^2$, $X^3$, and $X^4$ each independently represent a substituted amino group, a hydrocarbyloxy group, or an optionally substituted hydrocarbyl group. It is preferred that at least one of $X^2$, $X^3$, and $X^4$ be a substituted amino group, and it is more preferred that two of $X^2$, $X^3$, and $X^4$ be a substituted amino group.

A suitable substituted amino group which can form $X^2$, $X^3$, and $X^4$ is a group represented by General Formula

(2) below:

[Chem. 2]

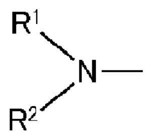

(2)

In General Formula (2) above, $R^1$ and $R^2$ may or may not be bonded to each other; if $R^1$ and $R^2$ are not bonded to each other, $R^1$ and $R^2$ each independently represent an optionally substituted hydrocarbyl group or a trihydrocarbylsilyl group; and if $R^1$ and $R^2$ are bonded to each other, $R^1$ and $R^2$ represent a hydrocarbylene group optionally containing at least one species selected from the group consisting of nitrogen, oxygen, sulfur, and silicon atoms.

Examples of a hydrocarbyl group which can form $R^1$ and $R^2$ include linear alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, preferred are linear alkyl groups, and more preferred is a methyl group or an ethyl group.

If the hydrocarbyl group which can form $R^1$ and $R^2$ has a substituent, examples thereof include hydrocarbyl groups having a hydrocarbyloxy group as a substituent, and the like. Examples of a hydrocarbyl group having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form $R^1$ and $R^2$ include trialkylsilyl groups such as a trimethylsilyl group, a triethylsilyl group, and a tert-butyldimethylsilyl group, and the like.

If $R^1$ and $R^2$ are bonded to each other, examples of the hydrocarbylene group which can form $R^1$ and $R^2$ include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form $R^1$ and $R^2$ contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a group represented by $-CH=N-CH_2-CH_2-$, a group represented by $-CH_2-CH_2-O-CH_2-CH_2-$, a group represented by $-CH_2-CH_2-S-CH_2-CH_2-$, a group represented by $-CH_2-CH_2-SiH_2-CH_2-CH_2-$, a group represented by $-CH_2-CH_2-SiMe_2-CH_2-CH_2-$, a group represented by $-CH_2-CH_2-SiEt_2-CH_2-CH_2-$, and the like.

Preferably, $R^1$ and $R^2$ are alkyl groups or are bonded to form an alkylene group. More preferably, $R^1$ and $R^2$ are alkyl groups. Still more preferably, $R^1$ and $R^2$ are a methyl group or an ethyl group.

When $R^1$ and $R^2$ in General Formula (2) above are hydrocarbyl groups, specific examples of groups represented by General Formula (2) above include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, preferred are dialkylamino groups, and more preferred are a dimethylamino group, a diethylamino group, and a di-n-butylamino group.

In General Formula (2) above, if $R^1$ and $R^2$ each are a hydrocarbyl group having a hydrocarbyloxy group as a substituent, specific examples of the group represented by General Formula (2) above include di(alkoxyalkyl)amino groups such as a di(methoxymethyl)amino group and a di(ethoxymethyl)amino group, and the like.

If $R^1$ and $R^2$ in General Formula (2) above are trihydrocarbylsilyl groups, specific examples of the group represented by General Formula (2) above include trialkylsilyl group-containing amino groups such as a bis(trimethylsilyl)amino group, a bis(tert-butyldimethylsilyl) amino group, and an N-trimethylsilyl-N-methylamino group, and the like.

If $R^1$ and $R^2$ in General Formula (2) above are bonded to each other to form a hydrocarbylene group, specific examples of the group represented by General Formula (2) above include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

If $R^1$ and $R^2$ in General Formula (2) above are bonded to form a hydrocarbylene group containing a nitrogen atom and/or an oxygen atom, specific examples of the group represented by General Formula (2) above include a 1-imidazolyl group, a 4,5-dihydro-1-imidazolyl group, a morpholino group, and the like.

The group represented by General Formula (2) above is preferably a dialkylamino group or a 1-alkyleneimino

group. More preferred are dialkylamino groups, and still more preferred are a dimethylamino group, a diethylamino group, and a di-n-butylamino group.

Examples of the hydrocarbyloxy group which can form $X^2$, $X^3$, and $X^4$ in General Formula (1) above include alkoxy groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form $X^2$, $X^3$, and $X^4$ in General Formula (1) above include alkyl groups such as a methyl group, an ethyl group, an n-propyl group, an isopropyl group, an n-butyl group, a sec-butyl group, and a tert-butyl group; aryl groups such as a phenyl group, a 4-methyl-1-phenyl group, and a benzyl group; and the like.

If the hydrocarbyl group which can form $X^2$, $X^3$, and $X^4$ has a substituent, examples thereof include hydrocarbyl groups having a hydrocarbyloxy group as a substituent. Examples thereof include alkoxyalkyl groups such as a methoxymethyl group, an ethoxymethyl group, an ethoxyethyl group, and the like.

If in General Formula (1) above, $X^1$ is a chemical single bond and one of $X^2$, $X^3$, and $X^4$ is a substituted amino group, specific examples of the vinyl compound having a silicon atom-containing functional group represented by General Formula (1) above include (dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis(trialkylsilyl)amino]dialkylvinylsilanes such as [bis(trimethylsilyl) amino]dimethylvinylsilane, [bis(t-butyldimethylsilyl)amino]dimethylvinylsilane, [bis(trimethylsilyl) amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1) above, $X^1$ is a hydrocarbylene group and one of $X^2$, $X^3$, and $X^4$ is a substituted amino group, specific examples of the vinyl compound having a silicon atom-containing functional group represented by General Formula (1) above include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1) above, $X^1$ is a chemical single bond and two of $X^2$, $X^3$, and $X^4$ are substituted amino groups, specific examples of the vinyl compound containing a silicon atom-containing functional group represented by General Formula (1) above include bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane; and the like.

If in General Formula (1) above, $X^1$ is a hydrocarbylene group and two of $X^2$, $X^3$, and $X^4$ are substituted amino groups, specific examples of the vinyl compound having a silicon atom-containing functional group represented by General Formula (1) above include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane, and the like.

If in General Formula (1) above, $X^1$ is a chemical single bond and three of $X^2$, $X^3$, and $X^4$ are substituted amino groups, specific examples of the vinyl compound having a silicon atom-containing functional group represented by General Formula (1) above include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane, and the like.

If in General Formula (1) above, $X^1$ is a hydrocarbylene group and three of $X^2$, $X^3$, and $X^4$ are substituted amino groups, specific examples of the vinyl compound having silicon atom-containing functional group represented by General Formula (1) above include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane, and the like.

If in General Formula (1) above, $X^1$ is a chemical single bond and all of $X^2$, $X^3$, and $X^4$ are not substituted amino groups, specific examples of the vinyl compound having a silicon atom-containing functional group represented by General Formula (1) above include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tertbutoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1) above, preferred are those where $X^1$ is a chemical single bond, more preferred are those where $X^1$ is a chemical single bond and two of $X^2$, $X^3$, and $X^4$ are substituted amino groups, and particularly preferred are those where $X^1$ is a chemical single bond and two of $X^2$, $X^3$, and $X^4$ are dialkylamino groups.

Among these compounds represented by General Formula (1) above, preferred are bis(dimethylamino)methylvinylsilane, bis(diethylamino)methylvinylsilane, and bis(di-n-butylamino)methylvinylsilane, and particularly preferred is bis(diethylamino)methylvinylsilane.

Examples of vinyl compounds having a functional group interactive with silica other than the compound represented by General Formula (1) above include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) above is used as the vinyl compound having a functional group interactive with silica, the conjugated diene-based polymer according to the present invention includes units represented by General Formula (3) below as the units of the vinyl compound having a functional group interactive with silica:

[Chem. 3]

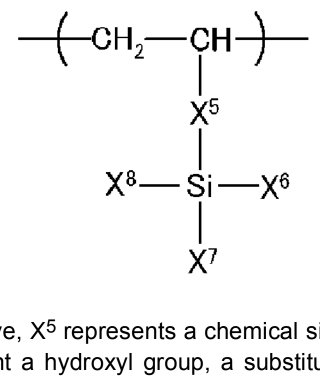

(3)

In General Formula (3) above, $X^5$ represents a chemical single bond or a hydrocarbylene group, and $X^6$, $X^7$, and $X^8$ each independently represent a hydroxyl group, a substituted amino group, a hydrocarbyloxy group, or an optionally substituted hydrocarbyl group.

In the unit represented by General Formula (3) above, $X^5$ corresponds to $X^1$ in the compound represented by General Formula (1), and $X^6$, $X^7$, and $X^8$ correspond to $X^2$, $X^3$, and $X^4$ in the compound represented by General Formula (1), respectively. For this reason, $X^5$, $X^6$, $X^7$, and $X^8$ in the unit represented by General Formula (3) above can be the same as those listed for $X^1$, $X^2$, $X^3$, and $X^4$ in the compound represented by General Formula (1) above. When the compound represented by General Formula (1) above where at least one of $X^2$, $X^3$, and $X^4$ is a substituted amino group or a hydrocarbyloxy group is used, at least one of $X^2$, $X^3$, and $X^4$ can be converted into a hydroxyl group as a result of

hydrolysis of the substituted amino group or the hydrocarbyloxy group at any timing in any step.

The proportion of units of a vinyl compound containing a functional group interactive with silica in the conjugated diene polymer according to the present invention is preferably 0.001 to 10.000% by weight, more preferably 0.001 to 3.000% by weight relative to 100% by weight of the total amount of total monomer units. When the proportion of units of a vinyl compound having a functional group interactive with silica is controlled within the ranges above, the conjugated diene polymer can have sufficient processability, and a cross-linked rubber having further enhanced fuel efficiency can be obtained.

The conjugated diene polymer according to the present invention may also contain different monomer units other than the conjugated diene monomer units, the aromatic vinyl monomer units, and units of the vinyl compound containing a functional group interactive with silica. Examples of a different compound forming such different monomer units include linear olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like.

In the conjugated diene polymer according to the present invention, the bonding form of the monomer units can be a variety of bonding forms such as a block form, a tapered form, and a random form, and preferred is a random form. When the random form is selected, a cross-linked rubber having further enhanced fuel efficiency can be obtained.

The conjugated diene polymer according to the present invention preferably has a modifying group formed by modifying a terminal of the polymer chain of the conjugated diene polymer with a modifier.

A preferred modifying group has a functional group interactive with silica because it can appropriately enhance the compatibility with a filler such as silica and a cross-linked rubber having further enhanced wear resistance and fuel efficiency can be obtained. Here, the functional group interactive with silica is a functional group which forms a covalent bond between the functional group and the silica surface or can cause an intermolecular force weaker than a covalent bond (such as ion-dipole interaction, dipole-dipole interaction, hydrogen bond, or van der Waals force). Preferred interaction formed between silica and the functional group is a covalent bond or an intermolecular force weaker than a covalent bond (such as ion-dipole interaction, dipole-dipole interaction, hydrogen bond, or van der Waals force). More preferred is a weak intermolecular force (such as ion-dipole interaction, dipole-dipole interaction, hydrogen bond, or van der Waals force) because it is easy to control the ionic strength index within a suitable range. Examples of the functional group interactive with silica include, but should not be limited to, nitrogen atom-containing functional groups, silicon atom-containing functional groups, oxygen atom-containing functional groups, and the like.

Because it is easier to control the ionic strength index within a suitable range, preferred modifiers for forming a modifying group are nitrogen atom-containing modifiers. Among nitrogen atom-containing modifiers, hydrocarbyloxysilane compounds containing a nitrogen atom can be suitably used, for example.

The hydrocarbyloxysilane compound containing a nitrogen atom is a silicon-containing compound having at least one group containing a nitrogen atom and at least one hydrocarbyloxy group. Such a hydrocarbyloxysilane compound containing a nitrogen atom is not particularly limited, and a compound represented by General Formula (4) below can be suitably used:

[Chem. 4]

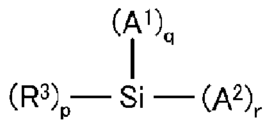

(4)

In General Formula (4) above, $R^3$ is a hydrocarbyl group, $A^1$ is a hydrocarbyloxy group, $A^2$ is a group containing a nitrogen atom, p is an integer of 0 to 2, q is an integer of 1 to 3, r is an integer of 1 to 3, and p+q+r=4. The group containing a nitrogen atom represented by $A^2$ may be a group containing a primary amino group having active hydrogen atoms and/or a secondary amino group having an active hydrogen atom, or may be a group containing a nitrogen atom other than these.

Specific examples of the compound represented by General Formula (4) above are not particularly limited, and examples of compounds represented by General Formula (4) where $A^2$ is a group containing a primary amino group having active hydrogen atoms and/or a secondary amino group having an active hydrogen atom include compounds having a 3-aminopropyl group as $A^2$, such as 3-aminopropyldimethylmethoxysilane, 3-aminopropylmethyldimethoxysilane, 3-aminopropyltrimethoxysilane, 3-aminopropyldimethylethoxysilane, 3-aminopropylmethyldiethoxysilane, and 3-aminopropyltriethoxysilane; compounds having a 4-aminobutyl group as $A^2$, such as 4-aminobutyldimethylmethoxysilane, 4-aminobutylmethyldimethoxysilane, 4-aminobutyltrimethoxysilane, 4-aminobutyldimethylethoxysilane, 4-aminobutylmethyldiethoxysilane, and 4-aminobutyltriethoxysilane; compounds having a 3-(2-aminoethylamino)propyl group

as $A^2$, such as 3-(2-aminoethylamino)propyldimethylmethoxysilane, 3-(2-aminoethylamino)propylmethyldimethoxysilane, 3-(2-aminoethylamino)propyltrimethoxysilane, 3-(2-aminoethylamino)propyldimethylethoxysilane, 3-(2-aminoethylamino)propylmethyldiethoxysilane, and 3-(2-aminoethylamino)propyltriethoxysilane; and the like.

Examples of compounds represented by General Formula (4) where $A^2$ is a group other than the group containing a primary amino group having active hydrogen atoms and/or secondary amino group having an active hydrogen atom include compounds having a 3-dimethylaminopropyl group as $A^2$, such as 3-dimethylaminopropyltrimethoxysilane, 3-dimethylaminopropylmethyldimethoxysilane, 3-dimethylaminopropyldimethylmethoxysilane, 3-dimethylaminopropyltriethoxysilane, 3-dimethylaminopropylmethyldiethoxysilane, and 3-dimethylaminopropyldimethylethoxysilane; compounds having a 3-diethylaminopropyl group as $A^2$, such as [3-(diethylamino)propyl]trimethoxysilane, 3-diethylaminopropylmethyldimethoxysilane, 3-diethylaminopropyldimethylmethoxysilane, 3-diethylaminopropyltriethoxysilane, 3-diethylaminopropylmethyldiethoxysilane, and 3-diethylaminopropyldimethylethoxysilane; compounds having a 3-dipropylaminopropyl group as $A^2$, such as 3-dipropylaminopropyltrimethoxysilane, 3-dipropylaminopropylmethyldimethoxysilane, 3-dipropylaminopropyldimethylmethoxysilane, 3-dipropylaminopropyltriethoxysilane, 3-dipropylaminopropylmethyldiethoxysilane, and 3-dipropylaminopropyldimethylethoxysilane; compounds having a 3-dibutylaminopropyl group as $A^2$, such as 3-dibutylaminopropyltrimethoxysilane, 3-dibutylaminopropylmethyldimethoxysilane, 3-dibutylaminopropyldimethylmethoxysilane, 3-dibutylaminopropyltriethoxysilane, 3-dibutylaminopropylmethyldiethoxysilane, and 3-dibutylaminopropyldimethylethoxysilane; compounds having a 3-phenylmethylaminopropyl group as $A^2$, such as 3-phenylmethylaminopropyltrimethoxysilane, 3-phenylmethylaminopropylmethyldimethoxysilane, 3-phenylmethylaminopropyldimethylmethoxysilane, 3-phenylmethylaminopropyltriethoxysilane, 3-phenylmethylaminopropylmethyldiethoxysilane, and 3-phenylmethylaminopropyldimethylethoxysilane; compounds having a 3-(4-methylpiperazinyl) propyl group as $A^2$, such as 3-(4-methylpiperazinyl)propyltrimethoxysilane, 3-(4-methylpiperazinyl)propylmethyldimethoxysilane, 3-(4-methylpiperazinyl)propyldimethylmethoxysilane, 3-(4-methylpiperazinyl)propyltriethoxysilane, 3-(4-methylpiperazinyl)propylmethyldiethoxysilane, and 3-(4-methylpiperazinyl)propyldimethylethoxysilane;

compounds having an N,N-bis(trimethylsilyl)aminopropyl group as $A^2$, such as N,N-bis(trimethylsilyl)aminopropyltrimethoxysilane, N,N-bis(trimethylsilyl)aminopropyltriethoxysilane, N,N-bis(trimethylsilyl)aminopropylmethyldimethoxysilane, and N,N-bis(trimethylsilyl)aminopropylmethyldiethoxysilane; compounds having an N,N-bis(triethylsilyl)aminopropyl group as $A^2$, such as N,N-bis(triethylsilyl)aminopropyltrimethoxysilane, N,N-bis(trimethylsilyl)aminopropyltriethoxysilane, N,N-bis(triethylsilyl)aminopropylmethyldimethoxysilane, and N,N-bis(triethylsilyl)aminopropylmethyldiethoxysilane; compounds having an N,N',N'-tris(trimethylsilyl)-N-(2-aminoethyl)-3-aminopropyl group as $A^2$, such as N,N',N'-tris(trimethylsilyl)-N-(2-aminoethyl)-3-aminopropyltrimethoxysilane, N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldimethoxysilane, and N,N',N'-tris(trimethylsilyl)-N-(2-aminoethyl)-3-aminopropylmethyldiethoxysilane; and the like.

The hydrocarbyloxysilane compound containing a nitrogen atom suitably used is also a compound represented by General Formula (5) below:

[Chem. 5]

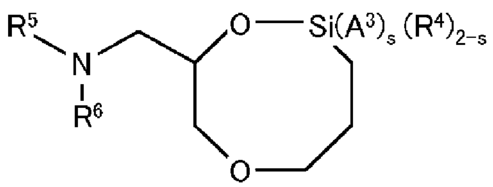

(5)

In General Formula (5) above, $A^3$ is a hydrocarbyloxy group; $R^4$ represents an optionally substituted hydrocarbon group; $R^5$ and $R^6$ each independently represent an optionally substituted hydrocarbon group, and $R^5$ and $R^6$ may be bonded to each other to form a ring structure together with the nitrogen atom bonded thereto; when $R^5$ and $R^6$ form a ring structure, these and a heteroatom other than the nitrogen atom bonded thereto as well as the nitrogen atom bonded thereto may form the ring structure, s is an integer of 0 to 2.

Examples of particularly preferred compounds represented by General Formula (5) above include those in which hydrocarbon groups represented by $R^5$ and $R^6$ are bonded to each other to form a piperazine ring structure together with the nitrogen atom bonded thereto. More specifically, a compound represented by General Formula (6) below is particularly preferred. When a compound represented by General Formula (5) having such a structure is used, a cross-linked rubber having further enhanced fuel efficiency can be obtained.

[Chem. 6]

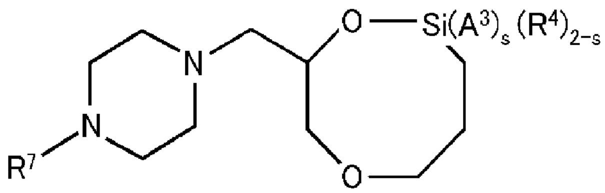

(6)

In General Formula (6), $A^3$, $R^4$, and s are as defined in General Formula (5) above, and $R^7$ represents a hydrocarbon group.

Specific examples of the compound represented by General Formula (5) above include 2,2-dimethoxy-8-(4-methylpiperazinyl)methyl-1,6-dioxa-2-silacyclooctane, 2,2-diethoxy-8-(4-methylpiperazinyl)methyl-1,6-dioxa-2-silacyclooctane, 2,2-dimethoxy-8-(N,N-diethylamino)methyl-1,6-dioxa-2-silacyclooctane, 2-methoxy-2-methyl-8-(4-methylpiperazinyl)methyl-1,6-dioxa-2-silacyclooctane, and the like. These compounds represented by General Formula (5) may be used alone or in combination.

Among these hydrocarbyloxysilane compounds containing a nitrogen atom, preferred are compounds represented by General Formula (4) above because the processability of the conjugated diene polymer and the wear resistance and fuel efficiency of a cross-linked rubber thereof can be further enhanced in a good balance.

The nitrogen atom-containing modifier preferably used is also a carbonyl group-containing compound containing a nitrogen atom. The carbonyl group-containing compound containing a nitrogen atom is a compound having at least one group containing a nitrogen atom and at least one carbonyl group. Although such a carbonyl group-containing compound containing a nitrogen atom is not particularly limited, a compound represented by General Formula (7) below can be suitably used:

[Chem. 7]

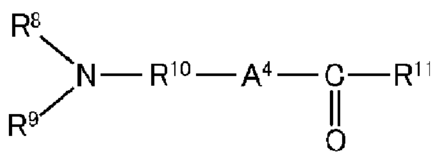

(7)

In General Formula (7) above, $R^8$ and $R^9$ each independently represent an optionally substituted hydrocarbyl group, $R^{10}$ represents a hydrocarbylene group, and $R^{11}$ represents an optionally substituted hydrocarbyl group or a hydrogen atom. $A^4$ represents a chemical single bond, an oxygen atom, or $-NR^{12}-$ (where $R^{12}$ represents a hydrocarbyl group or a hydrogen atom).

$R^8$ and $R^9$ may be partially bonded to each other to form a hydrocarbylene group optionally having a nitrogen atom and/or an oxygen atom. $R^{11}$ may be partially bonded to part of $R^8$ or $R^9$ to form a hydrocarbylene group optionally having a nitrogen atom and/or an oxygen atom.

In $R^8$, $R^9$, and $R^{11}$, the optionally substituted hydrocarbyl group indicates a hydrocarbyl group or a substituted hydrocarbyl group. Examples of the substituted hydrocarbyl group include hydrocarbyl groups substituted by a hydrocarbyloxy group, hydrocarbyl groups substituted by a substituted amino group, and the like.

Examples of hydrocarbyl groups include alkyl groups, alkenyl groups, alkynyl groups, aryl groups, aralkyl groups, and the like. Preferred alkyl groups are $C_1$ to $C_{12}$ alkyl groups, and examples thereof include methyl, ethyl, n-propyl, isopropyl, n-butyl, sec-butyl, tert-butyl, n-pentyl, n-hexyl, n-octyl, n-dodecyl, cyclopentyl, and cyclohexyl groups, and the like. Preferred alkenyl groups are $C_2$ to $C_{12}$ alkenyl groups, and examples thereof include a vinyl group, an allyl group, a 1-propenyl group, an isopropenyl group, and the like. Preferred alkynyl groups are $C_2$ to $C_{12}$ alkynyl groups, and examples thereof include an ethynyl group, a 2-propynyl group, and the like. Preferred aryl groups are $C_6$ to $C_{12}$ aryl groups, and examples thereof include a phenyl group, a methylphenyl group, an ethylphenyl group, a benzyl group, a tolyl group, a xylyl group, and the like. Preferred aralkyl groups are $C_7$ to $C_{13}$ aralkyl groups, and examples thereof include a benzyl group, and the like.

Examples of hydrocarbyl groups substituted by a hydrocarbyloxy group include alkoxyalkyl groups such as a methoxymethyl group, an ethoxymethyl group, an ethoxyethyl group, and the like.

Examples of hydrocarbyl groups substituted by a substituted amino group include (N,N-dialkylamino)alkyl groups, such as an N,N-dimethylaminomethyl group, a 2-(N,N-dimethylamino)ethyl group, a 2-(N,N-diethylamino)ethyl

group, a 3-(N,N-dimethylamino)propyl group, and a 3-(N,N-diethylamino)propyl group; (N,N-dialkylamino)aryl groups, such as a 4-(N,N-dimethylamino)phenyl group, a 3-(N,N-dimethylamino)phenyl group, a 4-(N,N-diethylamino)phenyl group, and a 3-(N,N-diethylamino)phenyl group; (N,N-dialkylamino)alkylaryl groups, such as a 4-(N,N-dimethylamino)methylphenyl group and a 4-[2-(N,N-dimethylamino)ethyl]phenyl group; alkyl groups substituted by a cyclic amino group, such as a 3-(1-pyrrolidinyl)propyl group, a 3-(1-piperidinyl)propyl group, and a 3-(1-imidazolyl)propyl group; aryl groups substituted by a cyclic amino group, such as a 4-(1-pyrrolidinyl)phenyl group, a 4-(1-piperidinyl)phenyl group, and a 4-(1-imidazolyl)phenyl group; and alkylaryl groups substituted by a cyclic amino group, such as a 4-[2-(1-pyrrolidinyl)ethyl]phenyl group, a 4-[2-(1-piperidinyl)ethyl]phenyl group, and a 4-[2-(1-imidazolyl)ethyl]phenyl group.

Examples of hydrocarbylene groups for $R^{10}$ include alkylene groups, alkenediyl groups, arylene groups, arylene-alkylene groups, and the like. Examples of alkylene groups include a methylene group, an ethylene group, a propylene group, a tetramethylene group, a pentamethylene group, a hexamethylene group, a heptamethylene group, an octamethylene group, a 2,2,4-trimethylhexane-1,6-diyl group, and the like. Examples of alkenediyl groups include a pentan-2-ene-1,5-diyl group, and the like. Examples of arylene groups include a phenylene group, a naphthylene group, a biphenylene group, and the like. Examples of arylene-alkylene groups include a phenylene-alkylene group, a naphthylene-alkylene group, a biphenylene-alkylene group, and the like.

In General Formula (7) above, $A^4$ is a chemical single bond, an oxygen atom, or $-NR^{12}-$ (where $R^{12}$ represents a hydrocarbyl group or a hydrogen atom). $A^4$ is preferably an oxygen atom or a group represented by $-NR^{12}-$ (where $R^{12}$ represents a hydrocarbylene group having one or more carbon atoms and 5 or less carbon atoms or a hydrogen atom), more preferably an oxygen atom or a group represented by -NH-, still more preferably a group represented by -NH-.

Examples of compounds represented by General Formula (7) above include those where $A^4$ is an oxygen atom, such as 2-(dihydrocarbylamino)ethyl acrylates such as 2-(dimethylamino)ethyl acrylate and 2-(diethylamino)ethyl acrylate; 3-(dihydrocarbylamino)propyl acrylates such as 3-(dimethylamino)propyl acrylate; 2-(dihydrocarbylamino)ethyl methacrylates such as 2-(dimethylamino)ethyl methacrylate and 2-(diethylamino)ethyl methacrylate; 3-(dihydrocarbylamino)propyl methacrylates such as 3-(dimethylamino)propyl methacrylate; and the like.

Further examples of compounds represented by General Formula (7) above include those where $A^4$ is $-NR^{12}-$ (where $R^{12}$ represents a hydrocarbyl group or a hydrogen atom), such as N-(2-dihydrocarbylaminoethyl)acrylamides such as N-(2-dimethylaminoethyl)acrylamide and N-(2-diethylaminoethyl)acrylamide; N-(3-dihydrocarbylaminopropyl)acrylamides such as N-(3-dimethylaminopropyl) acrylamide and N-(3-diethylaminopropyl)acrylamide; N-(4-dihydrocarbylaminobutyl)acrylamides such as N-(4-dimethylaminobutyl)acrylamide and N-(4-diethylaminobutyl) acrylamide; N-(2-dihydrocarbylaminoethyl)methacrylamides such as N-(2-dimethylaminoethyl) methacrylamide and N-(2-diethylaminoethyl)methacrylamide; N-(3-dihydrocarbylaminopropyl)methacrylamides such as N-(3-dimethylaminopropyl)methacrylamide and N-(3-diethylaminopropyl)methacrylamide; N-(4-dihydrocarbylaminobutyl)methacrylamides such as N-(4-dimethylaminobutyl)methacrylamide and N-(4-diethylaminobutyl)methacrylamide; and the like.

The conjugated diene polymer according to the present invention, when measured by gel permeation chromatography (hereinafter, also referred to as GPC in some cases), has a molecular weight distribution curve in which two or more peaks are present, wherein when among the peaks in the molecular weight distribution curve, a peak having the largest peak area proportion is defined as first peak P1, and a peak having the second largest peak area proportion is defined as second peak P2, the entire molecular weight distribution (Mw/Mn) of the conjugated diene polymer, the molecular weight distribution (Mw/Mn) of the first peak P1, and the molecular weight distribution (Mw/Mn) of the second peak P2 are controlled within specific ranges. Although it is sufficient that two or more peaks are present in the molecular weight distribution curve, three or more peaks may be present, or three to six peaks may be present.

The number of peaks in the molecular weight distribution curve can be determined by the following procedure. Specifically, a sample solution containing the conjugated diene polymer and an internal standard polystyrene having a molecular weight of 5000 is measured by GPC using a styrene-based column. A region having a molecular weight of less than 5000 is removed from the obtained molecular weight distribution curve, and the peak of the internal standard polystyrene is further removed to obtain a molecular weight distribution curve of the conjugated diene polymer. The obtained molecular weight distribution curve of the conjugated diene polymer is divided into regions in each of which both ends are defined by a base line or minimum values and each of which has one maximum value, and the peak areas of the divided regions are determined. The number of regions having a peak area of 1% or more can be determined as the number of peaks of molecular weight, where the entire peak area of the molecular weight distribution curve of the conjugated diene polymer is 100%. Specific measurement conditions to be used will be described later in Examples. The peak area is determined as an integrated value of the elution time (unit: seconds) and the Refractive Index (RI) intensity (unit: mV) at each elution time in the molecular weight distribution curve obtained from GPC measurement.

In the conjugated diene polymer according to the present invention, where the entire molecular weight distribution (Mw/Mn) of the conjugated diene polymer is defined as "$(Mw/Mn)_{all}$", the molecular weight distribution (Mw/Mn) of the first peak P1 as the peak having the largest peak area proportion is defined as "$(Mw/Mn)_{P1}$", and the molecular weight distribution (Mw/Mn) of the second peak P2 as the peak having the second largest peak area proportion is defined as "$(Mw/Mn)_{P2}$", the entire molecular weight distribution $(Mw/Mn)_{all}$ is in the range of 1.50 or more, the molecular weight

distribution $(Mw/Mn)_{P1}$ of the first peak P1 is in the range of 1.30 or less, and the molecular weight distribution $(Mw/Mn)_{P2}$ of the second peak P2 is in the range of 1.30 or less. In the present invention, when the molecular weight distributions $(Mw/Mn)_{all}$, $(Mw/Mn)_{P1}$, and $(Mw/Mn)_{P2}$ are controlled within the ranges above and the ionic strength index (described later) is controlled within the range of 25% or more, the processability of the conjugated diene polymer can be enhanced and a cross-linked rubber thereof having excellent strength properties, wear resistance, and fuel efficiency can be obtained.

In particular, as a result of research, the present inventors have found that if the conjugated diene polymer is controlled to have two or more peaks, among the peaks including the two or more peaks, molecular weight distributions (Mw/Mn) of two peaks having larger peak areas are controlled to be relatively small (namely, sharp) while the entire molecular weight distribution (Mw/Mn) is controlled to a predetermined value or greater (the entire molecular weight distribution is controlled to be relatively large), and further the ionic strength index described later is controlled to a predetermined value or greater, the processability of the conjugated diene polymer can be enhanced and a cross-linked rubber thereof having excellent strength properties, wear resistance, and fuel efficiency can be obtained.

The entire molecular weight distribution $(Mw/Mn)_{all}$ of the conjugated diene polymer is preferably 1.50 or more, more preferably 1.6 to 3.5, still more preferably 1.7 to 3.0. When a conjugated diene polymer having an excessively small molecular weight distribution $(Mw/Mn)_{all}$ is compounded with a compounding agent into a compound, the resulting compound is sandy and not held together, and thus has poor processability. A cross-linked rubber thereof has poor properties. The molecular weight distribution $(Mw/Mn)_{all}$ of the conjugated diene polymer can be determined by calculating the weight average molecular weight (Mw) and the number average molecular weight (Mn) of the entire conjugated diene polymer in terms of standard polystyrenes from the molecular weight distribution curve obtained in GPC measurement using a styrene-based column, and calculating the ratio thereof.

The molecular weight distribution $(Mw/Mn)_{P1}$ of the first peak P1 is 1.30 or less, preferably 1.25 or less, more preferably 1.20 or less, and the lower limit thereof is preferably 1.00 or more, more preferably 1.05 or more, but not particularly limited thereof. The molecular weight distribution $(Mw/Mn)_{P2}$ of the second peak P2 is 1.30 or less, preferably 1.25 or less, more preferably 1.20 or less, still more preferably 1.10 or less, and the lower limit is preferably 1.00 or more, more preferably 1.02 or more, but not particularly limited thereto. An excessively large molecular weight distribution $(Mw/Mn)_{P1}$ of the first peak P1 or an excessively large molecular weight distribution $(Mw/Mn)P_2$ of the second peak P2 results in insufficient dispersibility of silica in the entire conjugated diene polymer, thus poor processability, and further, an insufficient effect of improving the fuel efficiency of a cross-linked rubber to be obtained.

The molecular weight distribution $(Mw/Mn)_{P1}$ of the first peak P1 can be determined by the following method. Specifically, first, a peak having the largest peak area proportion is determined from the molecular weight distribution curve obtained by GPC measurement using a styrene-based column, and is extracted as the first peak P1. Then, the weight average molecular weight (Mw) and the number average molecular weight (Mn) of the portion corresponding to the first peak P1 (that is, the region of which both ends are defined by a base line or minimum values and which has the maximum value corresponding to the first peak P1) are calculated in terms of standard polystyrenes, and the ratio thereof is calculated. Thus, the molecular weight distribution $(Mw/Mn)_{P1}$ can be determined.

The molecular weight distribution $(Mw/Mn)_{P2}$ of the second peak P2 can be determined by the following method. Specifically, first, a peak having the second largest peak area proportion is determined from the molecular weight distribution curve obtained by GPC measurement using a styrene-based column, and is extracted as the second peak P2. Then, the weight average molecular weight (Mw) and the number average molecular weight (Mn) of the portion corresponding to the second peak P2 (that is, the region of which both ends are defined by a base line or minimum values and which has the maximum value corresponding to the second peak P2) are calculated in terms of standard polystyrenes, and the ratio thereof is calculated. Thus, the molecular weight distribution $(Mw/Mn)_{P2}$ can be determined.

Although either the first peak P1 or the second peak P2 may be the peak on the high molecular weight side, to provide a conjugated diene polymer which has higher processability and can provide a cross-linked rubber thereof having more excellent strength properties, wear resistance, and fuel efficiency, preferably, the first peak P1 is on the high molecular weight side of the second peak P2. Specifically, preferably, the peak top molecular weight $Mp_{_P1}$ of the first peak P1 (the molecular weight corresponding to the maximum value of the first peak) is larger than the peak top molecular weight $Mp_{_P2}$ of the second peak P2 (i.e., the molecular weight corresponding to the maximum value of the second peak). The peak top molecular weight $Mp_{_P1}$ of the first peak P1 is more preferably 3.5 times or larger, still more preferably 4.5 times or larger, further still more preferably 5.5 to 10 times the peak top molecular weight $Mp_{_P2}$ of the second peak P2.

The peak top molecular weight $Mp_{_P1}$ of the first peak P1, although not particularly limited, is preferably 550,000 or more, more preferably 600,000 or more, still more preferably 700,000 to 1,500,000, particularly preferably 800,000 to 1,200,000. The peak top molecular weight $Mp_{_P2}$ of the second peak P2, although not particularly limited, is preferably 50,000 to 500,000, more preferably 80,000 to 400,000, still more preferably 100,000 to 300,000, particularly preferably 110,000 to 200,000. The peak top molecular weights $Mp_{_P1}$ and $Mp_{_P2}$ can be calculated in terms of standard polystyrenes from the molecular weight distribution curve obtained by the above-mentioned GPC measurement using the styrene-based column.

Although it is sufficient that the first peak P1 has the largest peak area proportion in the molecular weight distribution curve of the conjugated diene polymer, the peak area proportion of the first peak P1 in the entire molecular weight distribution curve is preferably 50% or more, more preferably 51 to 80%, still more preferably 52 to 75%. Control of the peak area proportion of the first peak P1 within the ranges above results in a conjugated diene polymer which has higher processability and can provide a cross-linked rubber having more excellent strength properties, wear resistance, and fuel efficiency.

Although it is sufficient that the second peak P2 has the second largest peak area proportion in the molecular weight distribution curve of the conjugated diene polymer, the peak area proportion of the second peak P2 in the entire molecular weight distribution curve is preferably 10 to 50%, more preferably 15 to 48%, still more preferably 20 to 48%, particularly preferably 25 to 43%.

The entire weight average molecular weight (Mw) of the conjugated diene polymer according to the present invention, although not particularly limited, is preferably 200,000 to 3,000,000, more preferably 300,000 to 2,000,000, still more preferably 400,000 to 1,500,000, particularly preferably 420,000 to 800,000.

In the present invention, any method can be used without limitation to provide a conjugated diene polymer in which two or more peaks are present in the molecular weight distribution curve, and the entire molecular weight distribution $(Mw/Mn)_{all}$, the molecular weight distribution $(Mw/Mn)_{P1}$ of the first peak P1, and the molecular weight distribution $(Mw/Mn)_{P2}$ of the second peak P2 are controlled to fall within the ranges above. Examples thereof include a method of synthesizing the conjugated diene polymer through polymerization of a monomer mixture in which a polymerization initiator is additionally added during the polymerization; a method of coupling polymer chains prepared through polymerization; a method of blending two or more conjugated diene polymers having different molecular weight distribution curves; and the like. These methods may be used in combination. Among these, preferred are the method of synthesizing the conjugated diene polymer through polymerization of a monomer mixture in which a polymerization initiator is additionally added during the polymerization and the method of coupling polymer chains prepared through polymerization because these can more suitably control the entire molecular weight distribution $(Mw/Mn)_{all}$, the molecular weight distribution $(Mw/Mn)_{P1}$ of the first peak P1, and the molecular weight distribution $(Mw/Mn)_{P2}$ of the second peak P2. More preferred is the method of synthesizing the conjugated diene polymer through polymerization of a monomer mixture in which a polymerization initiator is additionally added during the polymerization because it can more suitably control the peak top molecular weight and peak area proportion of the first peak P1 and those of the second peak P2.

The conjugated diene polymer according to the present invention has an ionic strength index of 25% or more. Here, the ionic strength index indicates a value obtained as follows: A sample solution containing the conjugated diene polymer and an internal standard polystyrene (molecular weight: 5000) is measured by gel permeation chromatography (GPC) using a styrene-based column (hereinafter, referred to as "GPC measurement" in some cases) and GPC measurement using a cation exchange column. Based on the results thereof, the value is calculated from Expression (I) below:

$$\text{ionic strength index (\%)} = \{1 - (A_{CX}/B_{CX}) \times (B_{sty}/A_{sty})\} \times 100 \quad (I)$$

$A_{CX}$: The peak area of the molecular weight distribution curve of the conjugated diene polymer obtained by GPC measurement using a cation exchange column

$B_{CX}$: The peak area of the peak of the internal standard polystyrene obtained by GPC measurement using a cation exchange column

$B_{sty}$: The peak area of the peak of the internal standard polystyrene obtained by GPC measurement using a styrene-based column

$A_{sty}$: The peak area of the molecular weight distribution curve of the conjugated diene polymer obtained by GPC measurement using a styrene-based column

Here, in the definitions of $A_{CX}$ and $A_{sty}$, the peak area of the molecular weight distribution curve of the conjugated diene polymer indicates the peak area of the molecular weight distribution curve obtained by removing a molecular weight region of less than 5000 from the molecular weight distribution curve obtained by the measurement and further removing the peak of the internal standard polystyrene.

A column containing a styrenedivinylbenzene-based gel filler is defined as a styrene-based column.

Specifically, GPC measurement using a styrene-based column and GPC measurement using a cation exchange column can be performed under the conditions described later in Examples. When the conjugated diene polymer contains impurities such as oil, the measured value of the ionic strength index may have an error. In such a case, the ionic strength index may be measured after the conjugated diene polymer is, as needed, subjected to Soxhlet extraction or the like to remove impurities or the like.

In the GPC measurement using a cation exchange column, ion interaction occurs between part of polymer

chains of the conjugated diene polymer and the cation exchange column surface. For this reason, as a larger content of ionically interacting polymer chains is contained in the conjugated diene polymer and as the polymer chains have stronger ion interaction force, the peak intensity derived from the polymer chains in the molecular weight distribution curve obtained using the cation exchange column is lower than that in the molecular weight distribution curve obtained using the styrene-based column, and the ionic strength index determined from Expression (I) above becomes greater.

In the present invention, the ionic strength index of the conjugated diene polymer thus measured is controlled to fall within 25% or more. Thereby, the dispersibility of silica in the conjugated diene polymer can be appropriately enhanced, attaining high processability, and further obtaining a cross-linked rubber thereof having appropriately enhanced fuel efficiency. In particular, in the present invention, the ionic strength index is controlled within the range of 25% or more while the entire molecular weight distribution $(Mw/Mn)_{all}$, the molecular weight distribution $(Mw/Mn)_{P1}$ of the first peak P1, and the molecular weight distribution $(Mw/Mn)_{P2}$ of the second peak P2 are controlled within the ranges specified above. Thereby, a reduction in processability caused by increasing the ionic strength index (specifically, a problem that a compound sandy and not held together is obtained when the conjugated diene polymer is compounded with a compounding agent into the compound) can be effectively suppressed, and at the same time, the effect caused by increasing the ionic strength index, that is, the effect of enhancing the dispersibility of silica can be appropriately obtained.

The conjugated diene polymer according to the present invention has an ionic strength index of 25% or more, preferably 30 to 100%, more preferably 35 to 95%, still more preferably 40 to 90%.

The ionic strength index can be controlled by adjusting the proportion of polymer chains having a functional group interacting with the cation exchange column (such as a cationic group such as an amino group) in the conjugated diene polymer, the position of the functional group in the polymer chain (for example, inside the polymer chain, at a polymer chain terminal, or the like), the molecular structure in the vicinity of the functional group, the proportion of the functional group present, and the like, which are desirably used in appropriate combination. For example, the ionic strength index can be controlled by adjusting the type and the amount of a modifier for introducing a modifying group into the terminals of the polymer chains of the conjugated diene polymer.

The conjugated diene polymer according to the present invention has a Mooney viscosity (ML1+4) of preferably 10 to 200, more preferably 20 to 150. A Mooney viscosity within the ranges above results in more favorable processability. The Mooney viscosity (ML1+4) is measured according to JIS K6300-1:2013 at 100°C or 125°C.

From the viewpoint of handling properties, the conjugated diene polymer according to the present invention can be suitably used in the form of a mixture with an extender oil described later. When the conjugated diene polymer is used in the form of a mixture with an extender oil, the Mooney viscosity (ML1+4) of the conjugated diene polymer mixed with the extender oil can be determined as the Mooney viscosity (ML1+4) of the conjugated diene polymer. In this case, the suitable ranges and conditions for measurement of the Mooney viscosity (ML1+4) are as described above.

<Method of producing conjugated diene polymer>

The conjugated diene polymer according to the present invention can be prepared by polymerizing a monomer mixture containing at least a conjugated diene compound in an inert solvent in the presence of a polymerization initiator, for example. The conjugated diene polymer according to the present invention is preferably polymerized by solution polymerization.

Examples of the conjugated diene compound contained in the monomer mixture include the same conjugated diene compounds which can be used to form the above-mentioned conjugated diene polymer as those listed above. Furthermore, the monomer mixture may contain the aromatic vinyl monomer, the vinyl compound having a functional group interactive with silica, and the different monomers described above as needed.

Any inert solvent can be used in polymerization as long as it is usually used in solution polymerization and does not inhibit the polymerization reaction. Specific examples of the inert solvent include linear aliphatic hydrocarbons such as butane, pentane, hexane, heptane, and 2-butene; alicyclic hydrocarbons such as cyclopentane, cyclohexane, and cyclohexene; aromatic hydrocarbons such as benzene, toluene, and xylene; and the like. These inert solvents may be used alone or in combination. The inert solvent is used in an amount providing a monomer concentration of 1 to 50% by weight, preferably 10 to 40% by weight, for example.

Any polymerization initiator can be used in polymerization as long as it can catalyze polymerization of the monomer mixture containing the conjugated diene compound. Specific examples thereof include polymerization initiators containing an organic alkali metal compound, an organic alkaline earth metal compound, or a lanthanum-series metal compound as a primary catalyst. Examples of organic alkali metal compounds include organic lithium compounds, organic sodium compounds, organic potassium compounds, and the like, and specifically include organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic

potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanum-series metal compound as a primary catalyst include polymerization initiators containing a lanthanum-series metal salt of a lanthanum-series metal, such as lanthanum, cerium, praseodymium, neodymium, samarium, or gadolinium, and a carboxylic acid, a phosphorus-containing organic acid, or the like as a primary catalyst, and a cocatalyst such as an alkylaluminum compound, an organic aluminum hydride compound, or an organic aluminum halide compound, and the like. Among these polymerization initiators, preferably used are organic monolithium compounds and organic polyvalent lithium compounds, more preferably used are organic monolithium compounds, and particularly preferably used is n-butyllithium. The organic alkali metal compounds may be preliminarily reacted with a secondary amine compound such as dibutylamine, dihexylamine, dibenzylamine, pyrrolidine, piperidine, hexamethyleneimine, or heptamethyleneimine, and used as organic alkali metal amide compounds. When an organic alkali metal amide compound is used as a polymerization initiator, a cross-linked rubber having further excellent fuel efficiency and wear resistance can be obtained. These polymerization initiators may be used alone or in combination.

Although the amount of the polymerization initiator may be determined according to the desired molecular weight distribution curve of the conjugated diene polymer, the amount is in the range of usually 1 to 50 mmol, preferably 1.5 to 20 mmol, more preferably 2 to 15 mmol per 1000 g of monomer.

After polymerization is started in the presence of the polymerization initiator, a polymerization initiator re-addition operation may be performed, the operation comprising further adding the polymerization initiator to the polymerization system to continue the polymerization. The timing of the polymerization initiator re-addition operation and the number of times thereof are not particularly limited, and may be determined according to the desired molecular weight distribution curve of the conjugated diene polymer. The re-addition operation is performed preferably at a timing when the polymerization conversion ratio reaches 10 to 90%, more preferably 30 to 70%. The vinyl compound having a functional group interactive with silica, which has high processability, is preferably copolymerized after the re-addition operation is completed. Although the amount of the polymerization initiator per one re-addition operation is not particularly limited and may be determined according to the desired molecular weight distribution curve of the conjugated diene polymer, the amount is preferably 1 to 99 mol, more preferably 1.2 to 20 mol relative to 1 mol of the polymerization initiator used to start polymerization.

The polymerization temperature is in the range of usually -80 to +150°C, preferably 0 to 100°C, more preferably 30 to 90°C. The polymerization can be performed in any manner such as a batch or continuous mode. Preferred is a batch method because randomness in bonding of the conjugated diene monomer units and aromatic vinyl monomer units can be readily controlled.

In polymerization of the monomer mixture containing the conjugated diene compound, a polar compound is preferably added to an inert organic solvent to control the vinyl bond content of conjugated diene monomer units in the conjugated diene polymer to be prepared. Examples of the polar compound include ether compounds such as dibutyl ether and tetrahydrofuran; tertiary amines such as tetramethylethylenediamine; alkali metal alkoxides; phosphine compounds; and the like. Among these, preferred are ether compounds and tertiary amines, more preferred are tertiary amines, and particularly preferred is tetramethylethylenediamine. These polar compounds may be used alone or in combination. The amount of the polar compound to be used may be determined according to the desired vinyl bond content, and is preferably 0.001 to 100 mol, more preferably 0.01 to 10 mol relative to 1 mol of the polymerization initiator. When the amount of the polar compound falls within the ranges above, control of the vinyl bond content of the conjugated diene monomer units is facilitated, and failure caused by deactivation of the polymerization initiator hardly occurs.

As described above, the conjugated diene polymer can be prepared in the inert solvent. The conjugated diene polymer thus prepared usually has an active terminal.

The conjugated diene polymer having an active terminal may be reacted with a coupling agent to form coupled polymer chains. Examples of the coupling agent include, but should not be limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Although the coupling agent may be selected according to the desired molecular weight distribution curve of the conjugated diene polymer, preferred is use of a tri- or higher functional coupling agent, and more preferred is use of a tetra- or higher functional coupling agent.

When a coupling agent is used, preferably, the polymer chains having an active terminal prepared by the above-mentioned polymerization method are partially converted into coupled polymer chains by a coupling reaction to prepare a solution containing polymer chains having an active terminal and coupled polymer chains. In this case, the amount of the coupling agent used is not particularly limited, and may be selected according to the desired molecular weight

distribution curve of the conjugated diene polymer. The amount thereof is preferably 0.01 to 0.4 mol, more preferably 0.02 to 0.3 mol in terms of the functional group(s) of the coupling agent relative to 1 mol of the polymerization initiator used to start polymerization. As a result of addition of the coupling agent, the active terminals of the polymer chains having an active terminal are reacted in the coupling reaction, and thus the active terminal is consumed in the coupled polymer chains, and polymer chains without an active terminal are formed. On the other hand, non-coupled polymer chains keep their active terminals.

The active terminals contained in the conjugated diene polymer prepared through polymerization or active terminals which can be contained in the conjugated diene polymer after the coupling reaction are preferably reacted with a modifier to prepare a conjugated diene polymer having a modifying group. Examples of the modifiers to be used include the above-mentioned modifiers for forming a modifying group which can be contained in the conjugated diene polymer according to the present invention.

When the modifier is reacted with the active terminal of the conjugated diene polymer, the amount of the modifier is not particularly limited, and is preferably 0.01 to 10.0 mol, more preferably 0.02 to 5.0 mol, particularly preferably 0.05 to 2.0 mol relative to 1 mol of the active terminal in the polymer chains having an active terminal (relative to 1 mol of the metal atom in the organic alkali metal compound when the organic alkali metal compound is used as the polymerization initiator). Examples of the modifiers to be used include the above-mentioned modifiers, and these modifiers may be used alone or in combination.

Examples of the method of reacting the modifier with the active terminal of the conjugated diene polymer include, but should not be limited to, a method of mixing the modifier and the polymer chains having an active terminal in a solvent which can dissolve these, and the like. Examples of the solvent used at this time include those listed as the solvents used in polymerization of the conjugated diene polymer. At this time, for its simplicity, preferred is a method of adding the modifier to the polymerization solution used in the polymerization while the polymerization solution contains the resulting polymer chains having an active terminal as they are. At this time, the modifier may be added to the polymerization system in the form of a solution in an inert solvent used in the polymerization above, and the solution concentration is preferably in the range of 1 to 50% by weight. The reaction temperature is not particularly limited, and is usually 0 to 120°C. The reaction time is not particularly limited, and is usually 1 minute to 1 hour.

The modifier can be added to the solution containing polymer chains having an active terminal at any timing. Desirably, the modifier is added to the solution while the polymerization reaction has not completed and the solution containing polymer chains having an active terminal also contains the monomer, more specifically, the solution containing polymer chains having an active terminal contains 100 ppm or more, more preferably 300 to 50,000 ppm of the monomer. Such addition of the modifier can suppress a secondary reaction between the polymer chains having an active terminal and impurities contained in the polymerization system, and enables successful control of the reaction.

A polymerization terminator, such as an alcohol such as methanol or isopropanol or water, is preferably added to the active terminals of the conjugated diene polymer prepared through the polymerization or the active terminals which can be left after the reaction with the coupling agent and the modifier, as needed, to deactivate unreacted active terminals.

An antioxidant such as a phenol-based stabilizer, a phosphorusbased stabilizer, or a sulfur-based stabilizer may be added, as desired, to the solution of the conjugated diene polymer prepared by the above method. The amount of the antioxidant to be added may be appropriately determined according to the type thereof or the like. Furthermore, an extender oil may be compounded as desired to prepare an oil extended rubber. Examples of the extender oil include petroleum-based softening agents such as paraffin-based, aromatic, and naphthene-based softening agents, plant-derived softening agents, fatty acids, and the like. When a petroleum-based softening agent is used, the content of polycyclic aromatic compounds extracted by the method of IP346 (the test method specified by THE INSTITUTE of PETROLEUM, UK) is preferably less than 3%. If the extender oil is used, the amount thereof to be used is usually 5 to 100 parts by weight relative to 100 parts by weight of the conjugated diene polymer.

For example, the conjugated diene polymer thus prepared is separated from the reaction mixture by removing the solvent by any method such as steam stripping or heating of the mixed solution under reduced pressure. Thereby, a solid conjugated diene polymer can be obtained.

Two or more conjugated diene polymers having different monomer compositions, different molecular structures, different molecular weight distribution curves, and the like may be mixed as desired to prepare the conjugated diene polymer according to the present invention. In mixing of the two or more conjugated diene polymers, the two or more conjugated diene polymers may be mixed in the form of polymer solutions, or may be mixed in the form of solids. Preferred is mixing of the two or more conjugated diene polymers in the form of solutions. Specifically, it is more preferred that two or more solutions of conjugated diene polymers be separately prepared, and the solutions be mixed.

<Rubber composition>

The rubber composition according to the present invention is a composition comprising the conjugated diene

polymer according to the present invention described above, and a filler.

The rubber composition according to the present invention may contain other polymers than the above-mentioned conjugated diene polymer according to the present invention. Examples of the other polymers include natural rubbers (these may be reformed natural rubbers such as epoxidized natural rubber (ENR), hydrogenated natural rubber (HNR), deproteinized natural rubbers (DPNR), high purity natural rubbers (UPNR), and grafted natural rubbers), polyisoprene rubbers, emulsion polymerized styrene-butadiene copolymer rubbers, solution polymerized styrene-butadiene copolymer rubbers, polybutadiene rubbers (those may be high-cis-BR or low-cis-BR, or may be polybutadiene rubbers containing crystal fibers made of a 1,2-polybutadiene polymer), styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, nitrile isoprene rubbers, and the like, and exclude the above-mentioned conjugated diene polymers. Among these, preferred are natural rubbers, polyisoprene rubbers, polybutadiene rubbers, and solution polymerized styrene-butadiene copolymer rubbers. More preferred are natural rubbers. These polymers can be used alone or in combination, such as a combination of a natural rubber and a polybutadiene rubber or that of a natural rubber and a styrene-butadiene copolymer rubber.

In the rubber composition according to the present invention, the conjugated diene polymer according to the present invention occupies preferably 10 to 100% by weight, particularly preferably 50 to 100% by weight of the polymer ingredients in the rubber composition. When the conjugated diene polymer according to the present invention is present in such a proportion in the polymer ingredients, the rubber composition can have higher processability, and a cross-linked rubber having wear resistance and fuel efficiency in a better balance can be obtained.

Examples of the filler include silica, calcium silicate, aluminum silicate, carbon black, calcium carbonate, talc, aluminum hydroxide, alumina, clay, mica, and the like. Among these, preferred are carbon black and silica, and more preferred is silica because a cross-linked rubber having further enhanced wear resistance can be obtained. These can be used alone or in combination.

Examples of silica include dry white carbon, wet white carbon, colloidal silica, precipitated silica, calcium silicate, aluminum silicate, and the like. Among these, preferred is wet white carbon containing hydrous silicic acid as the main component. A carbon-silica dual phase filler comprising carbon black and silica carried on the surface thereof may also be used. These silicas can be used alone or in combination. The nitrogen adsorption specific surface area (measured by the BET method according to ASTM D3037-81) of the silica to be used is preferably 20 to 400 $m^2/g$, more preferably 50 to 220 $m^2/g$, particularly preferably 80 to 170 $m^2/g$. The silica preferably has a pH of 5 to 10.

As the silica, a variety of commercially available silicas can be used, for example. Examples thereof include "Hi-Sil210", "Hi-Sil233", and "Hi-Sil243LD" available from PPG Industries; "Zeosil 1115MP", "Zeosil 1165MP", and "Zeosil 165GR" available from Solvay S.A.; "ULTRASIL VN2", "ULTRASIL VN3", "ULTRASIL 7000GR", and "ULTRASIL 9100GR" available from EVONIK AG; "NIPSIL VN3", "NIPSIL AQ", and "NIPSIL ER", and "NIPSIL RS-150" available from TOSOH SILICA CORPORATION; and the like.

Examples of carbon blacks include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon blacks can be used alone or in combination.

The amount of the filler to be compounded with the rubber composition according to the present invention is preferably 10 to 250 parts by weight, more preferably 15 to 150 parts by weight, still more preferably 20 to 130 parts by weight, particularly preferably 75 to 100 parts by weight relative to 100 parts by weight of the polymer ingredients in the rubber composition. When the amount of the filler to be compounded is within the ranges above, a cross-linked rubber having further improved fuel efficiency and fuel efficiency in a good balance can be obtained while sufficient processability of the rubber composition is ensured.

To obtain a cross-linked rubber having further improved fuel efficiency, the rubber composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl)disulfide, bis(3-triethoxysilyl propyl)trisulfide, bis(3-(triethoxysilyl)propyl)tetrasulfide, γ-mercaptopropyltriethoxysilane, 3-[ethoxybis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanatepropyltriethoxysilane, vinyltriethoxysilane, N-(β-aminoethyl)-γ-aminopropyltrimethoxysilane, 3-trimethoxysilylpropyl methacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, NXT-Z45, and NXT available from Momentive Performance Materials Inc., Si69, Si75, and VP Si363

available from Evonick Degussa AG, and the like can also be used. These silane coupling agents may be used alone or in combination. One or two or more of these may be preliminarily formed into an oligomer, and may be used in the oligomer form. The amount of the silane coupling agent to be compounded is preferably 0.1 to 30 parts by weight, more preferably 1 to 15 parts by weight relative to 100 parts by weight of the filler.

Preferably, the rubber composition according to the present invention further contains a cross-linking agent. Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Furthermore, besides the ingredients described above, the rubber composition according to the present invention can be compounded with needed amounts of compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as a cross-linking agent, use in combination with a cross-linking accelerator and a cross-linking activator is preferred. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredients in the rubber composition.

To obtain the rubber composition according to the present invention, the ingredients may be kneaded according to the normal method. For example, the target composition can be prepared by kneading ingredients excluding thermally unstable ingredients such as the cross-linking agent and the cross-linking accelerator with the conjugated diene polymer, and then by mixing the thermally unstable ingredients such as the cross-linking agent and the cross-linking accelerator with the kneaded product. The kneading temperature during kneading the ingredients excluding the thermally unstable ingredients with the conjugated diene polymer is preferably 80 to 200°C, more preferably 120 to 180°C, and the kneading time is preferably 30 seconds to 30 minutes. The kneaded product is mixed with the thermally unstable ingredients after it is cooled to usually 100°C or less, preferably 80°C or less.

<Cross-linked rubber>

The cross-linked rubber according to the present invention is prepared by cross-linking the rubber composition according to the present invention described above.

The cross-linked rubber according to the present invention can be produced using the rubber composition according to the present invention, for example, by shaping the rubber composition with a molding machine having a desired shape, such as an extruder, an injection molding machine, a press, or a roll, and performing a cross-linking reaction by heating to provide a cross-linked rubber having a fixed shape. In this case, the rubber composition may be preliminarily shaped and then cross-linked, and may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber, such as press heating, steam heating, oven heating, or hot air heating, may be appropriately selected.

The cross-linked rubber according to the present invention thus prepared has excellent fuel efficiency and wear resistance because it is prepared using the above-mentioned conjugated diene polymer according to the present invention. For this reason, owing its excellent properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for

resins; resin film buffer agents; shoe soles; rubber shoes; golf balls; toys; and the like, for example. Especially, because of its excellent fuel efficiency and wear resistance, the cross-linked rubber according to the present invention is suitable for materials for tires.

## EXAMPLES

Hereinafter, the present invention will be described based on more detailed examples, but the present invention is not limited to these examples. Hereinafter, the term "parts" is based on weight unless otherwise specified weight. Tests and evaluations conformed to the followings.

<Styrene unit content, vinyl bond content>

The styrene unit content (% by weight) and the vinyl bond content (mol%) of conjugated diene monomer units were determined by $^1$H-NMR according to JIS K6239:2007.

<Mooney viscosity of conjugated diene polymer>

The Mooney viscosity (ML1+4) of the conjugated diene polymer was measured according to JIS K6300-1:2013 under the following conditions:

- test temperature: 100°C or 125°C
- type of rotor: L type
- tester used: SHIMADZU Mooney Viscometer SMV-300J available from SHIMADZU Corporation

<Ionic strength index>

For each of conjugated diene polymers (A) to (L), the ionic strength index was determined as follows: GPC measurement using a styrene-based column and GPC measurement using a cation exchange column were performed on a sample solution containing the conjugated diene polymer and the internal standard polystyrene. Based on these results, the ionic strength index of each conjugated diene polymer was calculated from Expression (I) below:

$$\text{ionic strength index (\%)} = \{1 - (A_{CX}/B_{CX}) \times (B_{sty}/A_{sty})\} \times 100 \quad (I)$$

$A_{CX}$: The peak area of the molecular weight distribution curve of the conjugated diene polymer obtained by GPC measurement using a cation exchange column
$B_{CX}$: The peak area of the peak of the internal standard polystyrene obtained by GPC measurement using a cation exchange column
$B_{sty}$: The peak area of the peak of the internal standard polystyrene obtained by GPC measurement using a styrene-based column
$A_{sty}$: The peak area of the molecular weight distribution curve of the conjugated diene polymer obtained by GPC measurement using a styrene-based column

Here, in the definitions of $A_{CX}$ and $A_{sty}$, the molecular weight distribution curve of the conjugated diene polymer indicates the molecular weight distribution curve obtained by removing a molecular weight region of less than 5000 from the resulting molecular weight distribution curve and further removing the peak of the internal standard polystyrene.
The GPC measurement using a styrene-based column was performed under the conditions below:

(GPC apparatus and software)

(i) Liquid delivery pump: LC-20AD (available from SHIMADZU Corporation)
(ii) Degasser :DGU-20A3 (available from SHIMADZU Corporation)
(iii) Autosampler: SIL-20A HT (available from SHIMADZU Corporation)
(iv) Column oven: CTO-20A (available from SHIMADZU Corporation)
(v) Differential refractive index detector (RID): RID-10A (available from SHIMADZU Corporation)
(vi) System controller: CBM-20A (available from SHIMADZU Corporation)

(vii) Measurement and analysis software: LC solution ver. 1.24 SP1

(viii) Measurement conditions

GPC columns: two Plus Pore series Poly Pore (7.5 mm I.D. × 300 mm) (available from Agilent Technologies, Inc.)
Mobile phase: 25 mg of 2-(ethylamino)ethanol (available from FUJIFILM Wako Chemical Corporation, Super grade) was added to 3 L of tetrahydrofuran (available from KANTO CHEMICAL CO., INC., Super grade, stabilizer-free).
Flow rate: 1 mL/min
Column oven temperature: 35°C
Detection: differential refractive index detector (RID)
RID cell temperature: 35°C
Sample solution injection amount: 100 μL
Standard substances for the calibration of the GPC column: PStQuick Kit-H (available from Tosoh Corporation)

(ix) Sample solution preparing conditions

Solvent: 5 mg of standard polystyrene A5000 (available from Tosoh Corporation) having a molecular weight of 5000 as the internal standard was added to 20 mL of tetrahydrofuran (available from KANTO CHEMICAL CO., INC., Super grade, stabilizer-free).
Sample solution concentration: 0.5 mg/mL
Dissolving auto-agitator: DF-8020 (available from Tosoh Corporation)
Dissolving conditions: 10 mg of a sample and 20 mL of the solvent were added to a screw vial, and sealed tightly to be stirred at a stirring speed of 60 reciprocations/min at room temperature for 120 minutes by DF-8020. Filtration was performed by a syringe equipped with a filtering filter.
Filtering filter: Millex-LG, pore size of 0.45 μm, hydrophilic, PTFE, filter diameter of 25 mm (available from Merck KGaA)
GPC measurement using a cation exchange column was performed under the conditions below. The same solution for measurement used in the above-mentioned GPC measurement using a styrene-based column was used in the GPC measurement using a cation exchange column.

(GPC apparatus and software)

(i) Liquid delivery pump: LC-20AD (available from SHIMADZU Corporation)
(ii) Degasser: DGU-20A3 (available from SHIMADZU Corporation)
(iii) Autosampler: SIL-20A HT (available from SHIMADZU Corporation)
(iv) Column oven: CTO-20A (available from SHIMADZU Corporation)
(v) Differential refractive index detector (RID): RID-10A (available from SHIMADZU Corporation)
(vi) System controller: CBM-20A (available from SHIMADZU Corporation)
(vii) Measurement and analysis software: LC solution ver. 1.24 SP1
(viii) Measurement conditions

GPC column: two Inertcil CX columns (4.6 × 250 mm, available from GL Sciences Inc.)
Mobile phase: tetrahydrofuran (available from KANTO CHEMICAL CO., INC. , Super grade, stabilizer-free)
Flow rate: 0.7 mL/min
Column oven temperature: 35°C
Detection: Differential refractive index detector (RID)
RID cell temperature: 35°C
Sample solution injection amount: 100 μL
Standard substances for the calibration of the GPC column: PStQuick Kit-H (available from Tosoh Corporation)

(ix) Sample solution preparing conditions

Solvent: 5 mg of standard polystyrene A5000 (available from Tosoh Corporation) having a molecular weight of 5000 as the internal standard was added into 20 mL of tetrahydrofuran (available from KANTO CHEMICAL CO., INC., Super grade, stabilizer-free).
Sample solution concentration: 0.5 mg/mL

Dissolving auto-agitator: DF-8020 (available from Tosoh Corporation)
Dissolving conditions: 10 mg of a sample and 20 mL of the solvent were added into a screw vial, and sealed tightly to be stirred at a stirring speed of 60 reciprocations/min at room temperature for 120 minutes by DF-8020. Filtration was performed by a syringe equipped with a filtering filter.
Filtering filter: Millex-LG, pore size of 0.45 μm, hydrophilic, PTFE, filter diameter of 25 mm (available form Merck KGaA)

<Weight average molecular weight (Mw), molecular weight distribution (Mw/Mn), number of peaks in molecular weight distribution curve, and peak top molecular weights of peaks>

For each of the conjugated diene polymers (A) to (L), the molecular weight distribution curve of the conjugated diene polymer was obtained by performing GPC measurement using a styrene-based column on a sample solution containing the conjugated diene polymer and the internal standard polystyrene as in the measurement of the ionic strength index described above. Based on the obtained molecular weight distribution curve of the conjugated diene polymer, the weight average molecular weight (Mw) and the molecular weight distribution (Mw/Mn) were determined. To be noted, the weight average molecular weight (Mw) and the number average molecular weight (Mn) were determined against polystyrene standards. The obtained molecular weight distribution curve of the conjugated diene polymer was divided into regions in each of which both ends were defined by the base line or minimum values and each of which had one maximum value, and the peak areas of the divided regions were determined. The number of regions having a peak area of 1% or more was determined as the number of peaks of molecular weight, where the entire peak area of the molecular weight distribution curve of the conjugated diene polymer was 100%. Furthermore, among the peaks of the divided regions (limited to the regions having a peak area of 1% or more), a peak in a region of the lowest molecular weight was defined as "peak A", a peak in a region of the second lowest molecular weight was defined as "peak B", and a peak in a region of the third lowest molecular weight was defined as "peak C". The peak top molecular weights of the peaks (the molecular weight indicating the maximum value in each region), the molecular weight distributions (Mw/Mn) of the peaks, and the peak area proportions of the peaks were determined.

<Processability (holding together of compound)>

The rubber compositions after primary kneading were visually observed to evaluate processability (holding together of the compound). Specifically, each of the rubber compositions was evaluated as ○ when it was glossy and held together like clay, and evaluated as × when it was not glossy, and was sandy and not held together. A rubber composition after primary kneading which was more glossy and held together indicates higher processability of the conjugated diene polymer.

<Processability (dispersion of silica)>

An uncross-linked rubber composition was processed into about 5 g of a test piece of a 3-cm square. The test piece was preheated at 100°C for 4 minutes, and was measured for storage modulus G' at dynamic distortions of 0.7% and 42% using PREMIER RPA (available from ALPHA TECHNOLOGIES) at a temperature of 40°C and a frequency of 10 Hz. The difference (ΔG') between the storage modulus G' at a dynamic distortion of 0.7% and the storage modulus G' at a dynamic distortion of 42% was calculated. For each difference (ΔG') in the storage modulus G' in Examples and Comparative Examples, the index was calculated where the difference (ΔG') in the storage modulus G' in Example 2 was 100, and was defined as the value of the processability (dispersion of silica). A greater value of the processability (dispersion of silica) indicates that silica contained in the uncross-linked rubber composition is more favorably dispersed, and thus that the conjugated diene polymer has higher processability.

<Fuel efficiency>

A cross-linked rubber sheet was punched into a strip having a thickness of 2 mm and a length of 40 mm to prepare a test piece. Using a rheometer (available from Ueshima Seisakusho Co., Ltd.), the loss tangent (tanδ (70°C)) of the obtained test piece was measured at a frequency of 10 Hz, an initial elongation of 100, a distortion amplitude of 0.25%, and a temperature of 70°C. For each of the loss tangents (tanδ(70°C)) in Examples and Comparative Examples, the index was calculated where the loss tangent (tanδ(70°C)) in Example 1 was 100, and was defined as the value of fuel efficiency. A greater value of fuel efficiency indicates that a cross-linked rubber to be obtained has more excellent fuel efficiency.

<Strength properties>

A cross-linked rubber sheet was measured for tensile strength (MPa) and elongation (%) at break under the following conditions according to JIS K6251:2010, and the product of the tensile strength and the elongation was calculated. For each of the products of the tensile strength and the elongation obtained, the index was calculated where the product of the tensile strength and the elongation in Example 1 was 100, and was defined as the value of strength properties. A greater value of the strength properties indicates that a cross-linked rubber to be obtained has more excellent strength properties.

· method of preparing the test piece: A sheet is prepared by press cross-linking, and is punched.
· the shape of the test piece: dumbbell shape #3
· direction of the test piece taken: a direction parallel to grain
· the number of test pieces: 3
· measurement temperature: 23°C
. test speed: 500 mm/min
· tester used: TENSOMETER 10k available from ALPHA TECHNOLOGIES
· tester capacity: loadcell type 1 kN

<Wear resistance>

A cross-linked rubber sheet was shaped into an outer diameter of 50 mm, an inner diameter of 15 mm, and a thickness of 10 mm to prepare a test piece. Using an FPS wear tester available from Ueshima Seisakusho Co., Ltd., the prepared test piece was measured for wear resistance at a load of 1 kgf and a slip ratio of 7%. For each of the wear resistances in Examples and Comparative Examples, the index was calculated where the wear resistance in Example 1 was 100, and was defined as the value of wear resistance. A greater value of the wear resistance indicates that a cross-linked rubber to be obtained has more excellent wear resistance.

<Preparation of polymer block (A) having active terminal>

140.8 g of cyclohexane and 3.0 mmol of tetramethylethylenediamine were added to a 800-ml vessel purged with nitrogen, and 30.0 mmol of normal butyllithium was further added. Subsequently, 113.6 g of isoprene and 9.2 g of styrene were slowly added, and these were reacted in a vessel at 50°C for 120 minutes to yield a polymer block (A) having an active terminal. The weight average molecular weight (Mw) of the resulting polymer block (A) was 6,500, the molecular weight distribution (Mw/Mn) was 1.10, the content of styrene monomer units was 7.5% by weight, the content of isoprene monomer units was 92.5% by weight, and the vinyl bond content was 7.0 mol%.

<Production Example 1>

Under a nitrogen atmosphere, 15300 g of industrial hexane (available from Sumitomo Chemical Co., Ltd., trade name: Hexane (general product), density: 0.68 g/mL), 12.03 mL of tetrahydrofuran, 3.69 mL of ethylene glycol diethyl ether, 1087 g of 1,3-butadiene, and 416 g of styrene were placed into an autoclave having an inner volume of 30 L and equipped with a stirrer. After a small amount of normal butyllithium as a scavenger was charged into the autoclave in order to preliminarily detoxify impurities, which would act to deactivate polymerization, 22.06 mmol of normal butyllithium was added to start polymerization at 32°C. At the same time when the polymerization reaction was started, 1298 g of 1,3-butadiene was continuously added over 160 minutes and 199 g of styrene was continuously added over 140 minutes. Subsequently, after 10 minutes after it was verified that the polymerization conversion ratio reached a range of 95% to 100%, 1.74 mmol of silicon tetrachloride was added and reacted for 15 minutes. In the next step, 15.11 mmol of [3-(diethylamino)propyl]trimethoxysilane was added and reacted for 15 minutes, and then 18.13 mmol of normal butyllithium was added to continue the reaction for another 15 minutes. Subsequently, 1.5 equivalents of methanol relative to the total lithium amount in the autoclave was added as a polymerization terminator to prepare a solution containing a conjugated diene polymer. 0.75 Parts of 2,4-bis(octylthiomethyl)-6-methylphenol (available from RIANOX, trade name "RIANOX1520") as an antioxidant was added to the solution relative to 100 parts of the conjugated diene polymer to prepare a polymer solution.

<Production Example 2>

Under a nitrogen atmosphere, 15300 g of industrial hexane (available from Sumitomo Chemical Co., Ltd., trade name: Hexane (general product), density: 0.68 g/mL), 13.22 mL of tetrahydrofuran, 2.73 mL of ethylene glycol dibutyl

ether, 497 g of 1,3-butadiene, and 452 g of styrene were placed into an autoclave having an inner volume of 30 L and equipped with a stirrer. After a small amount of normal butyllithium as a scavenger was charged into the autoclave in order to preliminarily detoxify impurities, which would act to deactivate polymerization, 1.46 mmol of bis(diethylamino)methylvinylsilane was added. Subsequently, 2.03 mmol of normal butyllithium was added to start polymerization at 43°C. After 20 minutes from the start of the polymerization reaction, 755 g of 1,3-butadiene was continuously added over 200 minutes. Subsequently, when the polymerization conversion ratio reached 60%, 2.03 mmol of normal butyllithium was added. Subsequently, after 20 minutes after it was verified that the polymerization conversion ratio reached a range of 95% to 100%, 6.77 mmol of N-(3-dimethylaminopropyl)acrylamide was added and reacted for 15 minutes. Subsequently, 1.5 equivalents of methanol relative to the total lithium amount in the autoclave was added as a polymerization terminator to prepare a solution containing a conjugated diene polymer. 0.56 Parts of 2,4-bis(octylthiomethyl)-6-methylphenol as an antioxidant was added to the solution relative to 100 parts of the conjugated diene polymer to prepare a polymer solution.

<Production Example 3>

Under a nitrogen atmosphere, 15300 g of industrial hexane (available from Sumitomo Chemical Co., Ltd., trade name: Hexane (general product), density: 0.68 g/mL), 13.22 mL of tetrahydrofuran, 2.73 mL of ethylene glycol dibutyl ether, 497 g of 1,3-butadiene, and 452 g of styrene were placed into an autoclave having an inner volume of 30 L and equipped with a stirrer. After a small amount of normal butyllithium as a scavenger was charged into the autoclave in order to preliminarily detoxify impurities, which would act to deactivate polymerization, 3.65 mmol of bis(diethylamino)methylvinylsilane was added. Subsequently, 2.24 mmol of normal butyllithium was added to start polymerization at 43°C. After 20 minutes from the start of the polymerization reaction, 755 g of 1,3-butadiene was continuously added over 200 minutes. Subsequently, when the polymerization conversion ratio reached 60%, 5.23 mmol of normal butyllithium was added. Subsequently, after 20 minutes after it was verified that the polymerization conversion ratio reached a range of 95% to 1000, 7.47 mmol of N-(3-dimethylaminopropyl)acrylamide was added and reacted for 15 minutes. Subsequently, 1.5 equivalents of methanol relative to the total lithium amount in the autoclave was added as a polymerization terminator to prepare a solution containing a conjugated diene polymer. 0.56 Parts of 2,4-bis(octylthiomethyl)-6-methylphenol as an antioxidant was added to the solution relative to 100 parts of the conjugated diene polymer to prepare a polymer solution.

<Production Example 4>

Under a nitrogen atmosphere, 15300 g of industrial hexane (available from Sumitomo Chemical Co., Ltd., trade name: Hexane (general product), density: 0.68 g/mL), 13.22 mL of tetrahydrofuran, 2.73 mL of ethylene glycol dibutyl ether, 497 g of 1,3-butadiene, and 452 g of styrene were placed into an autoclave having an inner volume of 30 L and equipped with a stirrer. After a small amount of normal butyllithium as a scavenger was charged into the autoclave in order to preliminarily detoxify impurities, which would act to deactivate polymerization, 2.03 mmol of normal butyllithium was added to start polymerization at 43°C. After 20 minutes from the start of the polymerization reaction, 755 g of 1,3-butadiene was continuously added over 200 minutes. Subsequently, when the polymerization conversion ratio reached 60%, 2.03 mmol of normal butyllithium was added. Subsequently, after 20 minutes after it was verified that the polymerization conversion ratio reached a range of 95% to 1000, 10.15 mmol of [3-(diethylamino)propyl]trimethoxysilane was added and reacted for 15 minutes. Subsequently, 1.5 equivalents of methanol relative to the total lithium amount in the autoclave was added as a polymerization terminator to prepare a solution containing a conjugated diene polymer. 0.56 Parts of 2,4-bis(octylthiomethyl)-6-methylphenol as an antioxidant was added to the solution relative to 100 parts of the conjugated diene polymer to prepare a polymer solution.

<Production Example 5>

Under a nitrogen atmosphere, 15300 g of industrial hexane (available from Sumitomo Chemical Co., Ltd., trade name: Hexane (general product), density: 0.68 g/mL), 13.22 mL of tetrahydrofuran, 3.09 mL of ethylene glycol dibutyl ether, 497 g of 1,3-butadiene, and 452 g of styrene were placed into an autoclave having an inner volume of 30 L and equipped with a stirrer. After a small amount of normal butyllithium as a scavenger was charged into the autoclave in order to preliminarily detoxify impurities, which would act to deactivate polymerization, 1.98 mmol of normal butyllithium was added to start polymerization at 43°C. After 20 minutes from the start of the polymerization reaction, 755 g of 1,3-butadiene was continuously added over 200 minutes. Subsequently, when the polymerization conversion ratio reached 50%, 7.02 mmol of normal butyllithium was added. Subsequently, after 20 minutes after it was verified that the polymerization conversion ratio reached a range of 95% to 1000, 13.50 mmol of [3-(diethylamino)propyl]trimethoxysilane was added to cause a reaction for 15 minutes. Thereafter, 20.25 mmol of normal butyllithium was added to continue the

reaction for another 15 minutes. Subsequently, 1.5 equivalents of methanol relative to the total lithium amount in the autoclave was added as a polymerization terminator to prepare a solution containing a conjugated diene polymer. 0.56 Parts of 2,4-bis(octylthiomethyl)-6-methylphenol as an antioxidant was added to the solution relative to 100 parts of the conjugated diene polymer to prepare a polymer solution.

<Production Example 6>

Under a nitrogen atmosphere, 8160 g of industrial hexane (available from Sumitomo Chemical Co., Ltd., trade name: Hexane (general product), density: 0.68 g/mL), 2340 g of cyclohexane, 8.02 mL of tetrahydrofuran, 0.78 mL of ethylene glycol dibutyl ether, 400 g of 1,3-butadiene, and 600 g of styrene were placed into an autoclave having an inner volume of 20 L and equipped with a stirrer. After a small amount of normal butyllithium as a scavenger was charged into the autoclave in order to preliminarily detoxify impurities which would act to deactivate polymerization, 1.36 mmol of normal butyllithium was added to start polymerization at 45°C. After 30 minutes from the start of the polymerization reaction, 500 g of 1,3-butadiene was continuously added over 150 minutes. Subsequently, when the polymerization conversion ratio reached 50%, 6.00 mmol of normal butyllithium was added. Subsequently, after 10 minutes after it was verified that the polymerization conversion ratio reached a range of 95% to 1000, 11.04 mmol of [3-(diethylamino)propyl]trimethoxysilane was added to cause a reaction for 20 minutes, and then 16.56 mmol of normal butyllithium was added to continue the reaction for another 20 minutes. Subsequently, 2.0 equivalents of methanol relative to the total lithium amount in the autoclave was added as a polymerization terminator to prepare a solution containing a conjugated diene polymer. 0.40 Parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.20 parts of pentaerythrityltetrakis(3-laurylthiopropionate) (available from Sumitomo Chemical Co., Ltd., trade name: Sumilizer TP-D) as antioxidants were added to the solution relative to 100 parts of the conjugated diene polymer to prepare a polymer solution.

<Production Example 7>

Under a nitrogen atmosphere, 8160 g of industrial hexane (available from Sumitomo Chemical Co., Ltd., trade name: Hexane (general product), density: 0.68 g/mL), 2340 g of cyclohexane, 8.02 mL of tetrahydrofuran, 0.75 mL of ethylene glycol dibutyl ether, 452 g of 1,3-butadiene, and 194 g of styrene were placed into an autoclave having an inner volume of 20 L and equipped with a stirrer. After a small amount of normal butyllithium as a scavenger was charged into the autoclave in order to preliminarily detoxify impurities, which would act to deactivate polymerization, 0.99 mmol of piperidine was added, and was stirred for 1 minute. Then, 1.98 mmol of normal butyllithium was added to start polymerization at 45°C. After 10 minutes from the start of the polymerization reaction, 639 g of 1,3-butadiene was continuously added over 160 minutes. Subsequently, when the polymerization conversion ratio reached 50%, 5.80 mmol of normal butyllithium was added. Subsequently, after 10 minutes after it was verified that the polymerization conversion ratio reached a range of 95% to 1000, 0.39 mmol of silicon tetrachloride was added and reacted for 20 minutes. Subsequently, 11.17 mmol of [3-(diethylamino)propyl]trimethoxysilane was added and reacted for 20 minutes, and then 16.76 mmol of normal butyllithium was added to continue the reaction for 20 minutes. Subsequently, 2.0 equivalents of methanol relative to the total lithium amount in the autoclave was added as a polymerization terminator to prepare a solution containing a conjugated diene polymer. 0.80 Parts of 2-tert-butyl-6-(3-tert-butyl-2-hydroxy-5-methylsbenzyl)-4-methylphenyl acrylate (available from Sumitomo Chemical Co., Ltd., trade name: Sumilizer GM) and 0.40 parts of pentaerythrityl tetrakis (3-laurylthiopropionate) (available from Sumitomo Chemical Co., Ltd., trade name: Sumilizer TP-D) as antioxidants were added to the solution relative to 100 parts of the conjugated diene polymer to prepare a polymer solution.

<Production Example 8>

Under a nitrogen atmosphere, 15300 g of industrial hexane (available from Sumitomo Chemical Co., Ltd., trade name: Hexane (general product), density: 0.68 g/mL), 13.22 mL of tetrahydrofuran, 2.73 mL of ethylene glycol dibutyl ether, 497 g of 1,3-butadiene, and 452 g of styrene were placed into an autoclave having an inner volume of 30 L and equipped with a stirrer. After a small amount of normal butyllithium as a scavenger was charged into the autoclave in order to preliminarily detoxify impurities, which would act to deactivate polymerization, 1.97 mmol of normal butyllithium was added to start polymerization at 43°C. After 20 minutes from the start of the polymerization reaction, 755 g of 1,3-butadiene was continuously added over 200 minutes. Subsequently, when the polymerization conversion ratio reached 60%, 4.60 mmol of normal butyllithium was added. Subsequently, after 20 minutes after it was verified that the polymerization conversion ratio reached a range of 95% to 1000, 1.5 equivalents of methanol relative to the total lithium amount in the autoclave was added as a polymerization terminator to prepare a solution containing a conjugated diene polymer. 0.56 Parts of 2,4-bis(octylthiomethyl)-6-methylphenol as an antioxidant was added to the solution relative to 100 parts of the conjugated diene polymer to prepare a polymer solution.

<Production Example 9>

Under a nitrogen atmosphere, 7956 g of industrial hexane (available from Sumitomo Chemical Co., Ltd., trade name: Hexane (general product), density: 0.68 g/mL), 1014 g of cyclohexane, 3.08 mmol of tetramethylethylenediamine, 425 g of 1,3-butadiene, 680 g of styrene, and 4.27 mmol of piperidine were placed into an autoclave having an inner volume of 20 L and equipped with a stirrer. After a small amount of normal butyllithium as a scavenger was charged into the autoclave in order to preliminarily detoxify impurities, which would act to deactivate polymerization, 4.27 mmol of normal butyllithium was added to start polymerization at 55°C. After the polymerization reaction was continued for 15 minutes, 8.54 mmol of bis(diethylamino)methylvinylsilane was added, and 595 g of 1,3-butadiene was continuously added over 85 minutes. Subsequently, after 15 minutes after it was verified that the polymerization conversion ratio reached a range of 95% to 1000, 6.41 mmol of [3-(diethylamino)propyl]trimethoxysilane was added and reacted for 15 minutes. Subsequently, 2 equivalents of methanol relative to the total lithium amount in the autoclave was added as a polymerization terminator to prepare a solution containing a conjugated diene polymer. 0.20 Parts of 2,4-bis(octylthiomethyl)-6-methylphenol as an antioxidant was added to the solution relative to 100 parts of the conjugated diene polymer to prepare a polymer solution.

<Production Example 10>

Under a nitrogen atmosphere, 7956 g of industrial hexane, 1014 g of cyclohexane, 2.63 mmol of tetramethylethylenediamine, 425 g of 1,3-butadiene, and 680 g of styrene were placed into an autoclave having an inner volume of 20 L and equipped with a stirrer. After a small amount of normal butyllithium as a scavenger was charged into the autoclave in order to preliminarily detoxify impurities, which would act to deactivate polymerization, 4.38 mmol (in terms of lithium atom content) of the polymer block (A) having an active terminal prepared above was added to start polymerization at 55°C. After the polymerization reaction was continued for 15 minutes, 595 g of 1,3-butadiene was continuously added over 85 minutes. Subsequently, after 10 minutes after it was verified that the polymerization conversion ratio reached a range of 95% to 100%, 2 equivalents of methanol relative to the total lithium amount in the autoclave was added as a polymerization terminator to prepare a solution containing a conjugated diene polymer. 0.20 Parts of 2,4-bis(octylthiomethyl)-6-methylphenol as an antioxidant was added to the solution relative to 100 parts of the conjugated diene polymer to prepare a polymer solution.

<Production Example 11>

Under a nitrogen atmosphere, 9180 g of industrial hexane, 1170 g of cyclohexane, 5.37 mmol of tetramethylethylenediamine, 500 g of 1,3-butadiene, 800 g of styrene, and 2.00 mmol of bis(diethylamino)methylvinylsilane were placed into an autoclave having an inner volume of 20 L and equipped with a stirrer. After a small amount of normal butyllithium as a scavenger was charged into the autoclave in order to preliminarily detoxify impurities, which would act to deactivate polymerization, 18.52 mmol (in terms of lithium atom content) of the polymer block (A) having an active terminal prepared above was added to start polymerization at 55°C. After the polymerization reaction was continued for 15 minutes, 4.00 mmol of bis(diethylamino)methylvinylsilane was added, and 700 g of 1,3-butadiene was continuously added over 75 minutes. Subsequently, after 10 minutes after it was verified that the polymerization conversion ratio reached a range of 95% to 100%, 2 equivalents of methanol relative to the total lithium amount in the autoclave was added as a polymerization terminator to prepare a solution containing a conjugated diene polymer. 0.20 Parts of 2,4-bis(octylthiomethyl)-6-methylphenol as an antioxidant was added to the solution relative to 100 parts of the conjugated diene polymer to prepare a polymer solution.

<Production Example 12>

A polymer solution was prepared through the same operation as that in Production Example 8 except that the amount of the added polymer block (A) having an active terminal was changed to 4.86 mmol (in terms of lithium atom content), and after 10 minutes after it was verified that the polymerization conversion ratio reached a range of 95% to 100%, 0.87 mmol of 1,6-bis(trichlorosilyl)hexane was added in the form of a 40% by weight cyclohexane solution, was stirred for 20 minutes, and a polymerization terminator was added.

<Production Example 13>

A polymer solution was prepared through the same operation as that in Production Example 9 except that the amount of tetramethylethylenediamine added was changed to 4.23 mmol, the amount of the added polymer block (A) having an active terminal was changed to 37.74 mmol (in terms of lithium atom content), and after 10 minutes after it

was verified that the polymerization conversion ratio reached a range of 95% to 100%, polyorganosiloxane represented by Formula (8) below was added in an amount providing an epoxy group content of 24.00 mmol, and was reacted for 10 minutes, and then a polymerization terminator was added.

[Chem. 8]

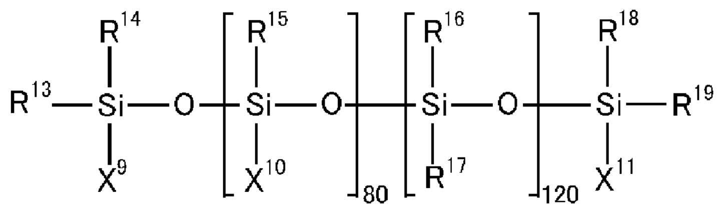

(8)

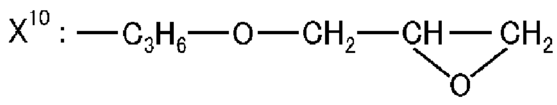

$X^9, X^{11}, R^{13} \sim R^{19}: -CH_3$

<Production Example 14>

Under a nitrogen atmosphere, 8160 g of industrial hexane (available from Sumitomo Chemical Co., Ltd., trade name: Hexane (general product), density: 0.68 g/mL), 2340 g of cyclohexane, 8.02 mL of tetrahydrofuran, 0.67 mL of ethylene glycol dibutyl ether, 921 g of 1,3-butadiene, and 217 g of styrene were placed into an autoclave having an inner volume of 20 L and equipped with a stirrer. After a small amount of normal butyllithium as a scavenger was charged into the autoclave in order to preliminarily detoxify impurities, which would act to deactivate polymerization, 3.61 mmol of normal butyllithium was added to start polymerization at 40°C. Immediately after the start of the polymerization, 1030 g of 1,3-butadiene was continuously added over 170 minutes. Subsequently, after 10 minutes after it was verified that the polymerization conversion ratio reached a range of 95% to 100%, 2.0 equivalents of methanol relative to the total lithium amount in the autoclave was added as a polymerization terminator to prepare a solution containing a conjugated diene polymer. 0.40 Parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.20 parts of pentaerythrityltetrakis(3-laurylthiopropionate) (available from Sumitomo Chemical Co., Ltd., trade name: Sumilizer TP-D) as antioxidants were added to the solution relative to 100 parts of the conjugated diene polymer to prepare a polymer solution.

<Production Example 15>

Under a nitrogen atmosphere, 8160 g of industrial hexane (available from Sumitomo Chemical Co., Ltd., trade name: Hexane (general product), density: 0.68 g/mL), 2340 g of cyclohexane, 8.02 mL of tetrahydrofuran, 0.50 mL of ethylene glycol dibutyl ether, 550 g of 1,3-butadiene, and 130 g of styrene were placed into an autoclave having an inner volume of 20 L and equipped with a stirrer. After a small amount of normal butyllithium as a scavenger was charged into the autoclave in order to preliminarily detoxify impurities, which would act to deactivate polymerization, 14.40 mmol (in terms of lithium atom content) of the polymer block (A) having an active terminal prepared above was added to start polymerization at 40°C. Immediately after the start of the polymerization, 616 g of 1,3-butadiene was continuously added over 140 minutes. Subsequently, after 10 minutes after it was verified that the polymerization conversion ratio reached a range of 95% to 100%, 14.40 mmol of N-(3-dimethylaminopropyl)acrylamide was added and reacted for 20 minutes. 2.0 Equivalents of methanol relative to the total lithium amount in the autoclave was added as a polymerization terminator to prepare a solution containing a conjugated diene polymer. 0.40 Parts of 2-tert-butyl-6-(3-tert-butyl-2-hydroxy-5-methylbenzyl)-4-methylphenyl acrylate (available from Sumitomo Chemical Co., Ltd., trade name: Sumilizer GM) and 0.20 parts of pentaerythrityltetrakis(3-laurylthiopropionate) (available from Sumitomo Chemical Co., Ltd., trade name: Sumilizer TP-D) as antioxidants were added to the solution relative to 100 parts of the conjugated diene polymer to prepare a polymer solution.

[Examples 1 to 7, Comparative Examples 1 and 5]

Each of the polymer solutions prepared in Production Examples 1 to 8, 14, and 15 and an oil (available from JXTG Energy Corporation, trade name "Process NC140") were mixed such that the amount of the conjugated diene polymer contained in each of the polymer solutions prepared in Production Examples 1 to 8, 14, and 15 and that of the oil compounded therewith were as shown in Table 1, and were homogeneously mixed by stirring. Thereafter, the mixtures each were spread on trays, and were left to stand at room temperature for 12 hours, and were dried in a vacuum dryer set at 65°C for 6.5 hours to remove the solvent. Thus, conjugated diene polymers (A) to (H) and (L) were prepared (in Examples 1, 6, and 7 and Comparative Example 5, no oil was compounded). The resulting conjugated diene polymers (A) to (H) and (L) were measured and evaluated for styrene unit content, vinyl bond content, Mooney viscosity, ionic strength index, weight average molecular weight (Mw), molecular weight distribution (Mw/Mn) of the conjugated diene polymer, the number of peaks in the molecular weight distribution curve, peak top molecular weights of peaks, molecular weight distributions (Mw/Mn) of peaks, and the peak area proportions of peaks by the methods described above. The results are shown in Table 1.

[Comparative Examples 2 to 4]

Each of the polymer solutions prepared in Production Examples 9 to 13 and an oil (available from NIPPON OIL CORPORATION, trade name "AROMAX T-DAE") were mixed such that the amount of the conjugated diene polymer contained in each of the polymer solutions prepared in Production Examples 9 to 13 and the amount of the oil compounded therewith were as shown in Table 1, and were homogeneously mixed by stirring. Thereafter, the solvent was removed by steam stripping, and the residues were dried in a vacuum dryer set at 60°C for 24 hours to prepare conjugated diene polymers (I) to (K). The resulting conjugated diene polymers (I) to (K) were measured and evaluated for styrene unit content, vinyl bond content, Mooney viscosity, ionic strength index, weight average molecular weight (Mw), molecular weight distribution (Mw/Mn) of the conjugated diene polymer, the number of peaks in the molecular weight distribution curve, peak top molecular weights of peaks, molecular weight distributions (Mw/Mn) of peaks, and peak area proportions of peaks. The results are shown in Table 1.

[Preparation of rubber composition; Examples 1 to 7, Comparative Examples 1 to 5]

In a Labo Plastomill having a volume of 250 mL, the conjugated diene polymers (A) to (L) in Examples 1 to 7 and Comparative Examples 1 to 5 were each masticated for 30 seconds. In the next step, materials other than sulfur and a vulcanization accelerator were added in the compounding proportions shown in Table 2, followed by further kneading for 3.5 minutes. The rubber compositions after primary kneading were discharged from the Labo Plastomill. When the rubber compositions after primary kneading were discharged, the Labo Plastomill showed a temperature of 140°C. The resulting rubber compositions after primary kneading were evaluated for processability (holding together of the compound) by the method described above. The results are shown in Table 2.

In the next step, the rubber compositions after primary kneading were each wound around an open roll mill set at 50°C, sulfur and a vulcanization accelerator were added, and these were kneaded to prepare uncross-linked rubber compositions in the form of a sheet. The resulting uncross-linked rubber compositions were evaluated for processability (dispersion of silica) by the method described above. The results are shown in Table 2.

The resulting uncross-linked rubber compositions were cross-linked by heating at 160°C for 30 to 35 minutes to prepare cross-linked rubber sheets. The resulting cross-linked rubber sheets were evaluated for fuel efficiency, strength properties, and wear resistance by the methods described above. The results are shown in Table 2.

[Table 1]

Table 1

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| Compounding proportions (parts) | Production Ex. 1 | 100 | — | — | — | — | — | — | — | — | — | — | — |
| | Production Ex. 2 | — | 100 | — | — | — | — | — | — | — | — | — | — |
| | Production Ex. 3 | — | — | 100 | — | — | — | — | — | — | — | — | — |
| | Production Ex. 4 | — | — | — | 100 | — | — | — | — | — | — | — | — |
| | Production Ex. 5 | — | — | — | — | 100 | — | — | — | — | — | — | — |
| | Production Ex. 6 | — | — | — | — | — | 100 | — | — | — | — | — | — |
| | Production Ex. 7 | — | — | — | — | — | — | 100 | — | — | — | — | — |
| | Production Ex. 8 | — | — | — | — | — | — | — | 100 | — | — | — | — |
| | Production Ex. 9 | — | — | — | — | — | — | — | — | 100 | — | — | — |
| | Production Ex. 10 | — | — | — | — | — | — | — | — | — | 67 | — | — |
| | Production Ex. 11 | — | — | — | — | — | — | — | — | — | 33 | — | — |
| | Production Ex. 12 | — | — | — | — | — | — | — | — | — | — | 95 | — |
| | Production Ex. 13 | — | — | — | — | — | — | — | — | — | — | 5 | — |
| | Production Ex. 14 | — | — | — | — | — | — | — | — | — | — | — | 50 |
| | Production Ex. 15 | — | — | — | — | — | — | — | — | — | — | — | 50 |
| | Extender oil (Process NC140) | — | 25 | 25 | 25 | 25 | — | — | 25 | — | — | — | — |
| | Extender oil (AROMAX T-DAE) | — | — | — | — | — | — | — | — | 20 | 20 | 20 | — |
| Physical properties of conjugated diene polymer | Styrene unit content (wt%) | 20 | 27 | 27 | 27 | 27 | 40 | 16 | 27 | 41 | 40 | 41 | 11 |
| | Vinyl bond content (mol%) | 55 | 37 | 36 | 37 | 36 | 27 | 32 | 37 | 25 | 24 | 24 | 37 |
| | Mooney viscosity (ML1+4) 100°C | 45 | — | — | — | — | 91 | 91 | — | 97 | 56 | 105 | 43 |
| | Mooney viscosity (ML1+4) 125°C | — | 53 | 48 | 56 | 40 | 77 | 77 | 51 | — | — | — | — |
| | Ionic strength index (%) | 56 | 30 | 29 | 83 | 78 | 89 | 71 | 0 | 83 | 0 | 13 | 13 |
| | Mw ($\times10^4$) | 48 | 67 | 62 | 61 | 54 | 65 | 70 | 63 | 67 | 43 | 177 | 61 |
| | Mw/Mn | 1.54 | 2.01 | 2.07 | 1.82 | 2.13 | 2.07 | 2.12 | 2.01 | 1.35 | 1.41 | 1.92 | 2.31 |
| | Number of peaks of molecular weight | 3 | 3 | 3 | 2 | 3 | 3 | 3 | 2 | 2 | 2 | 3 | 2 |
| | Peak top molecular weight of peak A ($\times10^4$) | 23 | 16 | 14 | 17 | 15 | 17 | 14 | 17 | 70 | 17 | 54 | 16 |
| | Peak top molecular weight of peak B ($\times10^4$) | 51 | 98 | 94 | 94 | 33 | 34 | 29 | 100 | 138 | 60 | 200 | 104 |
| | Peak top molecular weight of peak C ($\times10^4$) | 88 | 168 | 156 | — | 100 | 101 | 84 | — | — | — | 309 | — |
| | Mw/Mn of peak A | 1.06 | 1.06 | 1.06 | 1.06 | 1.06 | 1.04 | 1.04 | 1.08 | 1.25 | 1.04 | 1.32 | 1.09 |
| | Mw/Mn of peak B | 1.02 | 1.14 | 1.15 | 1.06 | 1.02 | 1.03 | 1.02 | 1.14 | 1.05 | 1.06 | 1.06 | 1.17 |
| | Mw/Mn of peak C | 1.04 | 1.02 | 1.02 | — | 1.11 | 1.08 | 1.17 | — | — | — | 1.02 | — |
| | Peak area proportion (%) of peak A | 51 | 30 | 30 | 30 | 40 | 38 | 28 | 33 | 89 | 35 | 20 | 50 |
| | Peak area proportion (%) of peak B | 16 | 67 | 67 | 70 | 6 | 9 | 5 | 67 | 11 | 65 | 71 | 50 |
| | Peak area proportion (%) of peak C | 33 | 3 | 3 | — | 54 | 53 | 67 | — | — | — | 9 | — |
| | Mw/Mn of P1 (largest peak detected) | 1.06 | 1.14 | 1.15 | 1.06 | 1.11 | 1.08 | 1.17 | 1.14 | 1.25 | 1.06 | 1.06 | 1.17 |
| | Mw/Mn of P2 (peak having second largest area proportion) | 1.04 | 1.06 | 1.06 | 1.06 | 1.06 | 1.04 | 1.04 | 1.08 | 1.05 | 1.04 | 1.32 | 1.09 |
| Conjugated diene polymer | | A | B | C | D | E | F | G | H | I | J | K | L |

[Table 2]

Table 2

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| Composition (parts) | Conjugated diene polymer (A) | 100 | — | — | — | — | — | — | — | — | — | — | — |
| | Conjugated diene polymer (B) (*) | — | 125 | — | — | — | — | — | — | — | — | — | — |
| | Conjugated diene polymer (C) (*) | — | — | 125 | — | — | — | — | — | — | — | — | — |
| | Conjugated diene polymer (D) (*) | — | — | — | 125 | — | — | — | — | — | — | — | — |
| | Conjugated diene polymer (E) (*) | — | — | — | — | 125 | — | — | — | — | — | — | — |
| | Conjugated diene polymer (F) | — | — | — | — | — | 100 | — | — | — | — | — | — |
| | Conjugated diene polymer (G) | — | — | — | — | — | — | 100 | — | — | — | — | — |
| | Conjugated diene polymer (H) (*) | — | — | — | — | — | — | — | 125 | — | — | — | — |
| | Conjugated diene polymer (I) (*) | — | — | — | — | — | — | — | — | 120 | — | — | — |
| | Conjugated diene polymer (J) (*) | — | — | — | — | — | — | — | — | — | 120 | — | — |
| | Conjugated diene polymer (K) (*) | — | — | — | — | — | — | — | — | — | — | 120 | — |
| | Conjugated diene polymer (L) | — | — | — | — | — | — | — | — | — | — | — | 100 |
| | Silica | 80 | 80 | 80 | 80 | 80 | 80 | 80 | 80 | 80 | 80 | 80 | 80 |
| | Oil | 37.5 | 12.5 | 12.5 | 12.5 | 12.5 | 37.5 | 37.5 | 12.5 | 17.5 | 17.5 | 17.5 | 37.5 |
| | Silane coupling agent | 6.4 | 6.4 | 6.4 | 6.4 | 6.4 | 6.4 | 6.4 | 6.4 | 6.4 | 6.4 | 6.4 | 6.4 |
| | Carbon black | 5 | 5 | 5 | 5 | 5 | 5 | 5 | 5 | 5 | 5 | 5 | 5 |
| | Zinc oxide | 3 | 3 | 3 | 3 | 3 | 3 | 3 | 3 | 3 | 3 | 3 | 3 |
| | Antioxidant | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator (1) | 1.5 | 1.5 | 1.5 | 1.5 | 1.5 | 1.5 | 1.5 | 1.5 | 1.5 | 1.5 | 1.5 | 1.5 |
| | Vulcanization accelerator (2) | 2 | 2 | 2 | 2 | 2 | 2 | 2 | 2 | 2 | 2 | 2 | 2 |
| Evaluations | Processability (holding together of compound) | O | O | O | O | O | O | O | O | × | O | O | O |
| | Processability (dispersion of silica) | 219 | 100 | 145 | 176 | 197 | 152 | 135 | 61 | 145 | 45 | 76 | 39 |
| | Fuel efficiency | 100 | 98 | 98 | 120 | 114 | 120 | 114 | 87 | 93 | 91 | 91 | 78 |
| | Strength properties | 100 | 145 | 155 | 151 | 153 | 145 | 121 | 178 | 71 | 178 | 157 | 150 |
| | Wear resistance | 100 | 133 | 133 | 121 | 123 | 173 | 100 | 103 | 33 | 105 | 117 | 81 |

(*) In the table above, the amounts of the Conjugated diene polymers (B) to (E) and (H) to (K) each include the oil in an amount shown in Table 1.

The materials shown in Table 2 are as follows.

- Silica: available form EVONIK AG, trade name "ULTRASIL(R) 7000GR"
- Oil: available from NIPPON OIL CORPORATION, trade name "AROMAX T-DAE"
- Silane coupling agent: bis(3-(triethoxysilyl)propyl)tetrasulfide (available from Degussa AG, trade name "Si69")
- Carbon black: available from Cabot Japan K.K., trade name "N339"
- Zinc oxide: available from Seido Chemical Industry Co., Ltd., trade name "Zinc oxide II"
- Antioxidant: 6PPD, N-phenyl-N'-(1,3-dimethylbutyl)-p-phenylenediamine (available from Ouchi Shinko Chemical

Industrial Co., Ltd., trade name "NOCRAC 6C")
· Stearic acid: available from NOF CORPORATION, trade name "BEAD STEARIC ACID CAMELLIA"
· Sulfur: available from Tsurumi Chemical Industry Co., Ltd., trade name "Sulfur 325 mesh "
· (1): N-cyclohexyl-2-benzothiazylsulfeneamide (available from Ouchi Shinko Chemical Industrial Co., Ltd., trade name "NOCCELER CZ-G")
· Vulcanization accelerator (2): diphenylguanidine (available from Ouchi Shinko Chemical Industrial Co., Ltd., trade name "NOCCELER D")

Tables 1 and 2 show that the conjugated diene polymers having an entire molecular weight distribution $(Mw/Mn)_{all}$ of 1.50 or more, the first peak P1 having a molecular weight distribution $(Mw/Mn)_{P1}$ of 1.30 or less (the first peak having the highest peak area proportion), the second peak having a molecular weight distribution $(Mw/Mn)_{P2}$ of 1.30 or less (the second peak having the second largest peak area proportion), and an ionic strength index of 25% or more had higher processability and provided cross-linked rubbers having excellent strength properties, wear resistance, and fuel efficiency (Examples 1 to 7).

In contrast, the conjugated diene polymers having an ionic strength index of less than 25% had poor dispersibility of silica, and provided cross-linked rubbers having low fuel efficiency (Comparative Examples 1, 3, and 5).

The conjugated diene polymer having an entire molecular weight distribution $(Mw/Mn)_{all}$ of less than 1.50 formed a sandy compound not held together during preparation of a compound, had poor processability, and provided a cross-linked rubber having low strength properties, wear resistance, and fuel efficiency (Comparative Example 2).

Furthermore, the conjugated diene polymer having the second peak having molecular weight distribution $(Mw/Mn)_{P2}$ of more than 1.30 (the second peak having the second largest peak area proportion) had poor dispersibility of silica, and provided a cross-linked rubber having low fuel efficiency (Comparative Example 3).

## Claims

**1.** A conjugated diene polymer containing at least conjugated diene monomer units,

wherein the conjugated diene polymer has an ionic strength index of 25% or more, and
has a molecular weight distribution curve where two or more peaks are present when measured by gel permeation chromatography,
wherein when among the peaks in the molecular weight distribution curve, a peak having the largest peak area proportion is defined as a first peak, and a peak having the second largest peak area proportion is defined as a second peak,
the conjugated diene polymer has an entire molecular weight distribution (Mw/Mn) of 1.50 or more, the first peak has a molecular weight distribution (Mw/Mn) of 1.30 or less, and the second peak has a molecular weight distribution (Mw/Mn) of 1.30 or less.

**2.** The conjugated diene polymer according to claim 1, wherein the first peak has a peak top molecular weight of 3.5 times or larger than that of the second peak.

**3.** The conjugated diene polymer according to claim 1 or 2, wherein the peak area proportion of the first peak is more than 50% in the entire molecular weight distribution curve.

**4.** The conjugated diene polymer according to any one of claims 1 to 3, wherein the peak top molecular weight of the first peak is 550,000 or more.

**5.** A rubber composition comprising the conjugated diene polymer according to any one of claims 1 to 4, and a filler.

**6.** A cross-linked rubber prepared by cross-linking the rubber composition according to claim 5.

**7.** A tire comprising the cross-linked rubber according to claim 6.

**INTERNATIONAL SEARCH REPORT**

International application No.
**PCT/JP2022/018202**

**A. CLASSIFICATION OF SUBJECT MATTER**

***B60C 1/00***(2006.01)i; ***C08C 19/22***(2006.01)i; ***C08F 236/10***(2006.01)i; ***C08L 15/00***(2006.01)i; ***C08K 3/011***(2018.01)i; ***C08K 3/013***(2018.01)i
FI: C08C19/22; C08K3/013; C08K3/011; C08L15/00; C08F236/10; B60C1/00 Z

According to International Patent Classification (IPC) or to both national classification and IPC

**B. FIELDS SEARCHED**

Minimum documentation searched (classification system followed by classification symbols)

C08C19/00-19/44; C08F6/00-246/00; C08K3/00-13/08; C08L1/00-101/14; B60C1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/034194 A1 (ASAHI KASEI KABUSHIKI KAISHA) 22 February 2018 (2018-02-22)<br>claims 1-10, paragraphs [0007], [0026], [0029], examples | 1-7 |
| A | WO 2018/181176 A1 (SUMITOMO CHEMICAL CO) 04 October 2018 (2018-10-04)<br>claims 1-6, examples | 1-7 |
| A | JP 2012-172077 A (ASAHI KASEI CHEMICALS CORP) 10 September 2012 (2012-09-10)<br>claims 1-6, examples | 1-7 |
| A | JP 2020-041136 A (ASAHI KASEI KABUSHIKI KAISHA) 19 March 2020 (2020-03-19)<br>claims 1-7, examples | 1-7 |
| E, A | WO 2022/080236 A1 (ZS ELASTOMERS CO LTD) 21 April 2022 (2022-04-21)<br>claims 1-10, examples | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/018202**

| Patent document cited in search report | Publication date (day/month/year) | Patent family member(s) | Publication date (day/month/year) |
|---|---|---|---|
| WO 2018/034194 A1 | 22 February 2018 | US 2021/0301046 A1 claims 1-20, paragraphs [0020], [0089], [0099], examples | |
| | | EP 3502145 A1 | |
| | | CN 109563184 A | |
| | | KR 10-2019-0032437 A | |
| WO 2018/181176 A1 | 04 October 2018 | US 2020/0031976 A1 claims 1-7, examples | |
| | | EP 3604365 A1 | |
| | | CN 110461893 A | |
| | | KR 10-2019-0127772 A | |
| JP 2012-172077 A | 10 September 2012 | (Family: none) | |
| JP 2020-041136 A | 19 March 2020 | CN 110878151 A claims 1-7, examples | |
| WO 2022/080236 A1 | 21 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018056025 A